# EUROPEAN PATENT APPLICATION

(11) **EP 4 549 215 A1**
(43) Date of publication of application: **07.05.2025**
(21) Application number: 22962169.3
(22) Date of filing: 14.10.2022
(51) Int. Cl.: B60K 35/00, B60W 40/02

(54) **SIGNAL PROCESSING DEVICE AND VEHICLE DISPLAY DEVICE INCLUDING SAME**

(71) Applicant: LG Electronics Inc., Yeongdeungpo-gu Seoul 07336 (KR)
(72) Inventor: CHOI, Byeongjun, Seoul 06772 (KR); KIM, Ilwan, Seoul 06772 (KR); HONG, Jinhyuk, Seoul 06772 (KR); PARK, Jongtae, Seoul 06772 (KR); LEE, Hansung, Seoul 06772 (KR); KIM, Hyeonggyu, Seoul 06772 (KR)
(74) Representative: Vossius & Partner Patentanwälte Rechtsanwälte mbB
(86) International application number: PCT/KR2022/015633
(87) International publication number: WO 2024/080419

(57) **Abstract**

A signal processing device and a vehicle display apparatus including the same are disclosed. The signal processing device according to an embodiment of the present disclosure includes: a memory configured to store data for an augmented reality lane carpet; and a processor configured to detect lane line object based on an image from a camera, wherein in response to the detected lane line object corresponding to a first shape, the processor is configured to set and display an augmented reality lane carpet with a first length, and in response to the detected lane line object corresponding to a second shape with a greater width than the first shape, the processor is configured to set and display an augmented reality lane carpet with a second length greater than the first length. Accordingly, an augmented reality-based lane guide corresponding to a lane shape can be provided.

## Description

### BACKGROUND

### 1. Technical Field

. The present disclosure relates to a signal processing device and a vehicle display apparatus including the same, and more particularly to a signal processing device capable of providing an augmented reality-based lane guide corresponding to a lane shape, and a vehicle display apparatus including the signal processing device.

### 2. Description of the Related Art

. A vehicle is an apparatus that a driver moves in a desired direction. A typical example of the vehicle is an automobile.

. Meanwhile, a display apparatus for vehicles is mounted in the vehicle for convenience of users who use the vehicle.

. For example, a display is disposed in a cluster in order to display various types of information. Meanwhile, in addition to the cluster, various displays, such as an audio video navigation (AVN) display, a head-up display for displaying a projected image on the windshield, etc., are mounted in the vehicle to display vehicle driving information and the like.

. Particularly, as the head-up display displays the projected image on the windshield, it is important to provide guide for situations in front of the vehicle.

### SUMMARY

. It is an objective of the present disclosure to provide a signal processing device capable of providing an augmented reality-based lane guide corresponding to a lane shape, and a vehicle display apparatus including the signal processing device.

. Meanwhile, it is another objective of the present disclosure to provide a signal processing device capable of providing an augmented reality-based lane guide corresponding to a position of a preceding vehicle, and a vehicle display apparatus including the signal processing device.

. Meanwhile, it is yet another objective of the present disclosure to provide a signal processing device capable of providing an augmented reality-based lane guide based on an image from a camera, map data or a vehicle speed, and a vehicle display apparatus including the signal processing device.

. Meanwhile, it is further another objective of the present disclosure to provide a signal processing device capable of providing an augmented reality-based lane guide based on a driver's position, and a vehicle display apparatus including the signal processing device.

. In accordance with an aspect of the present disclosure, the above and other objectives can be accomplished by providing a signal processing device including: a memory configured to store data for an augmented reality lane carpet; and a processor configured to detect lane line object based on an image from a camera, wherein in response to the detected lane line object corresponding to a first shape, the processor is configured to set and display an augmented reality lane carpet with a first length, and in response to the detected lane line object corresponding to a second shape with a greater width than the first shape, the processor is configured to set and display an augmented reality lane carpet with a second length greater than the first length.

. Meanwhile, the memory may be configured to store data for a lane image, wherein in response to the detected lane line object corresponding to the first shape, the processor may be configured to display a lane image with the first length, and in response to the detected lane line object corresponding to the second shape, the processor may be configured to display a lane image with the second length.

. Meanwhile, in response to the first shape corresponding to a decreasing width of the detected lane line object and the width of the detected lane line object corresponding to a first reference value, the processor may be configured to set a length corresponding to the first reference value to be the first length; and in response to the second shape corresponding to a increasing width or a constant with of the detected lane line object and the width of the detected lane line object corresponding to a second reference value greater than the first reference value, the processor may be configured to set a length corresponding to the second reference value to be the second length.

. Meanwhile, in response to a preceding vehicle object being detected based on the image from the camera, the processor may be configured to limit a length of the augmented reality lane carpet with the first length to a third length, or to limit a length of the augmented reality lane carpet with the second length to a fourth length.

. Meanwhile, the processor may be configured to receive vehicle speed information from a sensor device, and to change a width or length of the augmented reality lane carpet with the first length or the augmented reality lane carpet with the second length based on the vehicle speed information.

. Meanwhile, when a vehicle stops, the processor may be configured to stop displaying the augmented reality lane carpet with the first length or the augmented reality lane carpet with the second length.

. Meanwhile, as a vehicle travels, the processor may be configured to update and display the augmented reality lane carpet with the first length or the augmented reality lane carpet with the second length.

. Meanwhile, in response to a driving speed of the vehicle being lower than or equal to a reference speed, the processor may be configured to display the augmented reality lane carpet without updating the augmented reality lane carpet with the first length or the augmented reality lane carpet with the second length.

. Meanwhile, in response to the detected lane line object corresponding to the first shape in a state in which the detected lane line object do not match the map data stored in the memory, the processor may be configured to set and display the augmented reality lane carpet with the first length, and in response to the detected lane line object corresponding to the second shape with a greater width than the first shape, the processor may be configured to display the augmented reality lane carpet with the second length greater than the first length.

. Meanwhile, in response to the detected lane line object matching the map data stored in the memory, the processor may be configured to display an augmented reality route carpet based on the map data.

. Meanwhile, in response to the lane line object not being detected in the image from the camera, the map data not being stored in the memory or not being valid, and vehicle speed information and yaw rate information being received from the sensor device, the processor may be configured to display an augmented reality dynamic carpet based on the vehicle speed information and the yaw rate information.

. Meanwhile, in response to the lane line object not being detected in the image from the camera, the map data not being stored in the memory or not being valid, and the vehicle speed information and yaw rate information not being received from the sensor device, the processor may be configured to not display the augmented reality carpet.

. Meanwhile, in response to a width between lane lines, detected based on the lane line object in the image from the camera, being within an allowable range, the processor may be configured to update previous lane line object to current lane line object, and in response to the width between the detected lane lines falling outside the allowable range, the processor may not update the previous lane line object to the current lane line object.

. Meanwhile, in response to a variation in the width between the lane lines, detected based on the lane line object in the image from the camera, being greater than or equal to a first level, and a variation in one of two lane lines being lower than or equal to a second level which is lower than the first level, the processor may be configured to maintain previous lane line information of a remaining lane line.

. Meanwhile, the processor may be configured to detect a position of a driver's eyes based on an image from a vehicle internal camera, and to change a position for projecting the augmented reality lane carpet with the first length or the augmented reality lane carpet with the second length based on the position of the driver's eyes.

. Meanwhile, the processor may include: a data interface configured to receive an image from the camera; and an augmented reality engine configured to output the augmented reality lane carpet with the first length or the second length based on the image from the camera.

. Meanwhile, the augmented reality engine may be configured to perform sensor fusion based on the image from the camera, to perform geometric modeling based on a result of performing the sensor fusion, and to perform visualization based on a result of the modeling.

. In accordance with another aspect of the present disclosure, the above and other objectives can be accomplished by providing a signal processing device including: a memory configured to store data for an augmented reality lane carpet and map data; and a processor configured to detect lane line object based on an image from a camera, wherein in response to the detected lane line object matching the map data stored in the memory, the processor is configured to display an augmented reality route carpet based on the map data, and in response to the detected lane line object not matching the map data stored in the memory, the processor is configured to set and display an augmented reality lane carpet based on the detected lane line object.

. Meanwhile, in response to the detected lane line object corresponding to a first shape, the processor may be configured to set and display an augmented reality lane carpet with a first length, and in response to the detected lane line object corresponding to a second shape with a greater width than the first shape, the processor may be configured to set and display an augmented reality lane carpet with a second length greater than the first length.

### EFFECTS OF THE DISCLOSURE

. A signal processing device according to an embodiment of the present disclosure includes: a memory configured to store data for an augmented reality lane carpet; and a processor configured to detect lane line object based on an image from a camera, wherein in response to the detected lane line object corresponding to a first shape, the processor is configured to set and display an augmented reality lane carpet with a first length, and in response to the detected lane line object corresponding to a second shape with a greater width than the first shape, the processor is configured to set and display an augmented reality lane carpet with a second length greater than the first length. Accordingly, an augmented reality-based lane guide corresponding to a lane shape can be provided.

. Meanwhile, the memory may be configured to store data for a lane image, wherein in response to the detected lane line object corresponding to the first shape, the processor may be configured to display a lane image with the first length, and in response to the detected lane line object corresponding to the second shape, the processor may be configured to display a lane image with the second length. Accordingly, an augmented reality-based lane guide corresponding to a lane shape can be provided.

. Meanwhile, in response to the first shape corresponding to a decreasing width of the detected lane line object and the width of the detected lane line object corresponding to a first reference value, the processor may be configured to set a length corresponding to the first reference value to be the first length; and in response to the second shape corresponding to a increasing width or a constant with of the detected lane line object and the width of the detected lane line object corresponding to a second reference value greater than the first reference value, the processor may be configured to set a length corresponding to the second reference value to be the second length. Accordingly, an augmented reality-based lane guide corresponding to a lane shape can be provided.

. Meanwhile, in response to a preceding vehicle object being detected based on the image from the camera, the processor may be configured to limit a length of the augmented reality lane carpet with the first length to a third length, or to limit a length of the augmented reality lane carpet with the second length to a fourth length. Accordingly, an augmented reality-based lane guide corresponding to a position of the preceding vehicle can be provided.

. Meanwhile, the processor may be configured to receive vehicle speed information from a sensor device, and to change a width or length of the augmented reality lane carpet with the first length or the augmented reality lane carpet with the second length based on the vehicle speed information. Accordingly, an augmented reality-based lane guide corresponding to a vehicle speed and a lane shape can be provided.

. Meanwhile, when a vehicle stops, the processor may be configured to stop displaying the augmented reality lane carpet with the first length or the augmented reality lane carpet with the second length. Accordingly, it is possible to stop providing an augmented reality-based lane guide when the vehicle stops.

. Meanwhile, as a vehicle travels, the processor may be configured to update and display the augmented reality lane carpet with the first length or the augmented reality lane carpet with the second length. Accordingly, an augmented reality-based lane guide based on traveling of the vehicle can be provided.

. Meanwhile, in response to a driving speed of the vehicle being lower than or equal to a reference speed, the processor may be configured to display the augmented reality lane carpet without updating the augmented reality lane carpet with the first length or the augmented reality lane carpet with the second length. Accordingly, an augmented reality-based lane guide based on traveling of the vehicle can be provided.

. Meanwhile, in response to the detected lane line object corresponding to the first shape in a state in which the detected lane line object do not match the map data stored in the memory, the processor may be configured to set and display the augmented reality lane carpet with the first length, and in response to the detected lane line object corresponding to the second shape with a greater width than the first shape, the processor may be configured to display the augmented reality lane carpet with the second length greater than the first length. Accordingly, an augmented reality-based lane guide corresponding to a lane shape can be provided.

. Meanwhile, in response to the detected lane line object matching the map data stored in the memory, the processor may be configured to display an augmented reality route carpet based on the map data. Accordingly, an augmented reality-based lane guide can be provided based on the map data.

. Meanwhile, in response to the lane line object not being detected in the image from the camera, the map data not being stored in the memory or not being valid, and vehicle speed information and yaw rate information being received from the sensor device, the processor may be configured to display an augmented reality dynamic carpet based on the vehicle speed information and the yaw rate information. Accordingly, an augmented reality-based lane guide can be provided based on the vehicle speed information and the yaw rate information.

. Meanwhile, in response to the lane line object not being detected in the image from the camera, the map data not being stored in the memory or not being valid, and the vehicle speed information and yaw rate information not being received from the sensor device, the processor may be configured to not display the augmented reality carpet. Accordingly, it is possible to stop providing an augmented reality-based lane guide.

. Meanwhile, in response to a width between lane lines, detected based on the lane line object in the image from the camera, being within an allowable range, the processor may be configured to update previous lane line object to current lane line object, and in response to the width between the detected lane lines falling outside the allowable range, the processor may not update the previous lane line object to the current lane line object. Accordingly, an augmented reality-based lane guide corresponding to a lane width can be provided.

. Meanwhile, in response to a variation in the width between the lane lines, detected based on the lane line object in the image from the camera, being greater than or equal to a first level, and a variation in one of two lane lines being lower than or equal to a second level which is lower than the first level, the processor may be configured to maintain previous lane line information of a remaining lane line. Accordingly, an augmented reality-based lane guide corresponding to a lane width can be provided.

. Meanwhile, the processor may be configured to detect a position of a driver's eyes based on an image from a vehicle internal camera, and to change a position for projecting the augmented reality lane carpet with the first length or the augmented reality lane carpet with the second length based on the position of the driver's eyes. Accordingly, an augmented reality-based lane guide can be provided based on the driver's position.

. Meanwhile, the processor may include: a data interface configured to receive an image from the camera; and an augmented reality engine configured to output the augmented reality lane carpet with the first length or the second length based on the image from the camera. Accordingly, an augmented reality-based lane guide can be provided based on the image from the camera.

. Meanwhile, the augmented reality engine may be configured to perform sensor fusion based on the image from the camera, to perform geometric modeling based on a result of performing the sensor fusion, and to perform visualization based on a result of the modeling. Accordingly, an augmented reality-based lane guide can be provided based on the image from the camera.

. A signal processing device according to another embodiment of the present disclosure includes: a memory configured to store data for an augmented reality lane carpet and map data; and a processor configured to detect lane line object based on an image from a camera, wherein in response to the detected lane line object matching the map data stored in the memory, the processor is configured to display an augmented reality route carpet based on the map data, and in response to the detected lane line object not matching the map data stored in the memory, the processor is configured to set and display an augmented reality lane carpet based on the detected lane line object. Accordingly, an augmented reality-based lane guide corresponding to a lane shape can be provided.

. Meanwhile, in response to the detected lane line object corresponding to a first shape, the processor may be configured to set and display an augmented reality lane carpet with a first length, and in response to the detected lane line object corresponding to a second shape with a greater width than the first shape, the processor may be configured to set and display an augmented reality lane carpet with a second length greater than the first length. Accordingly, an augmented reality-based lane guide corresponding to a lane shape can be provided.

### BRIEF DESCRIPTION OF THE DRAWINGS

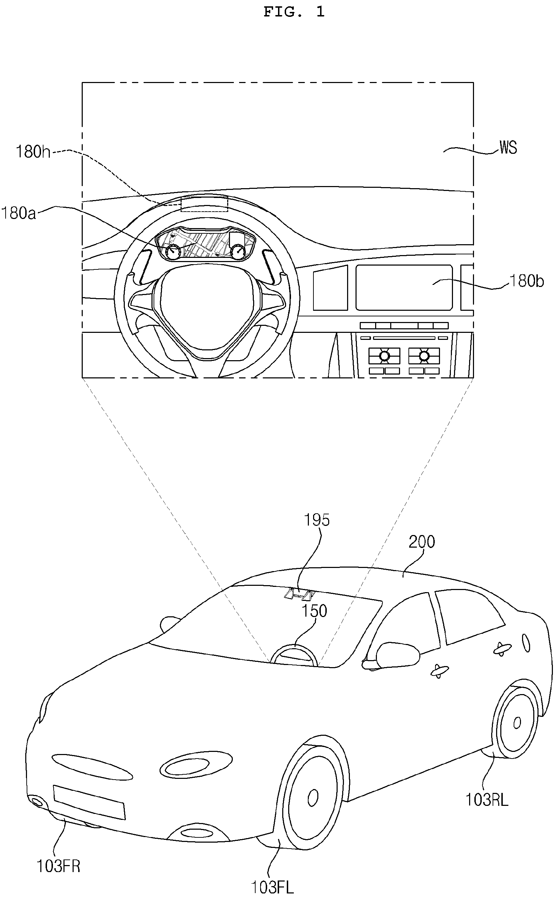

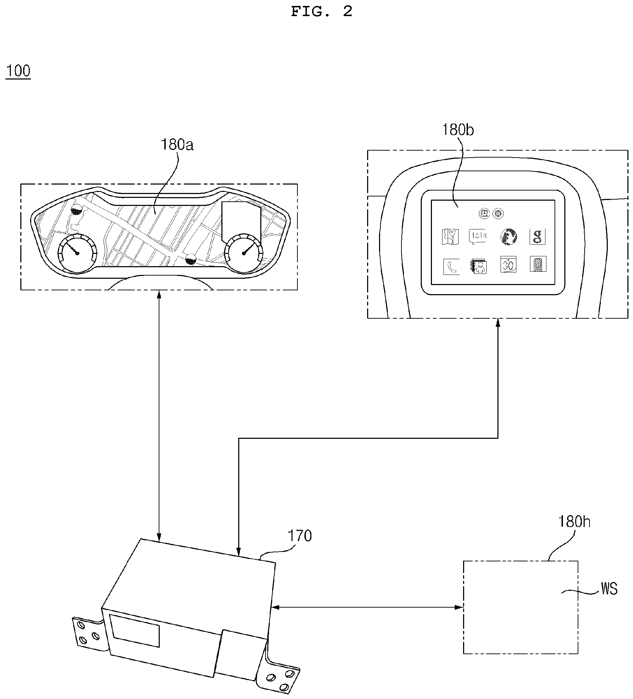

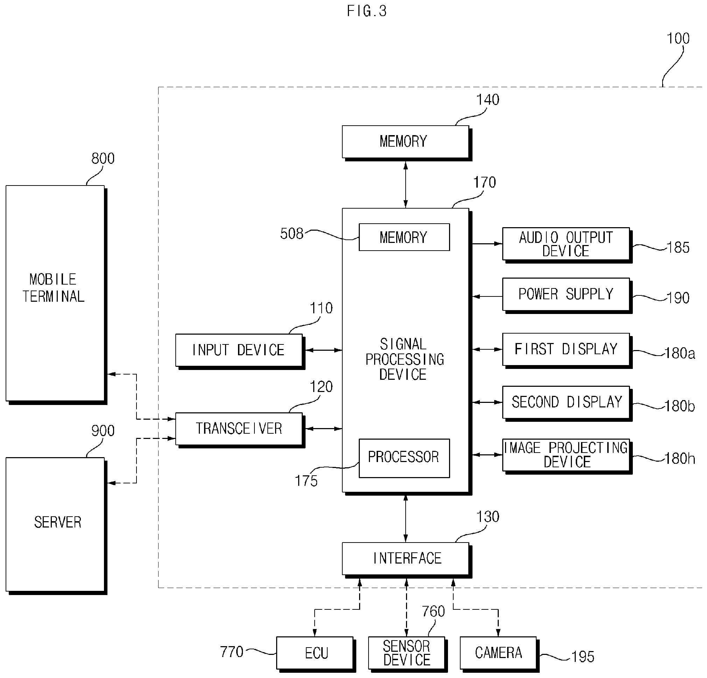

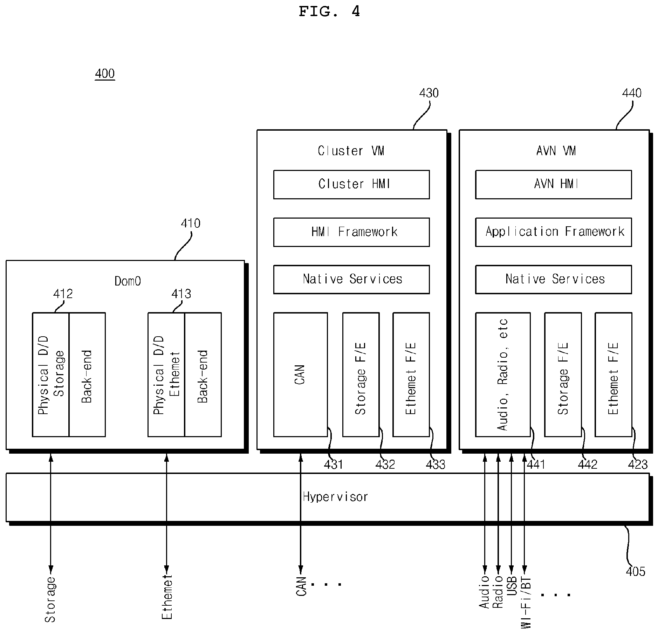

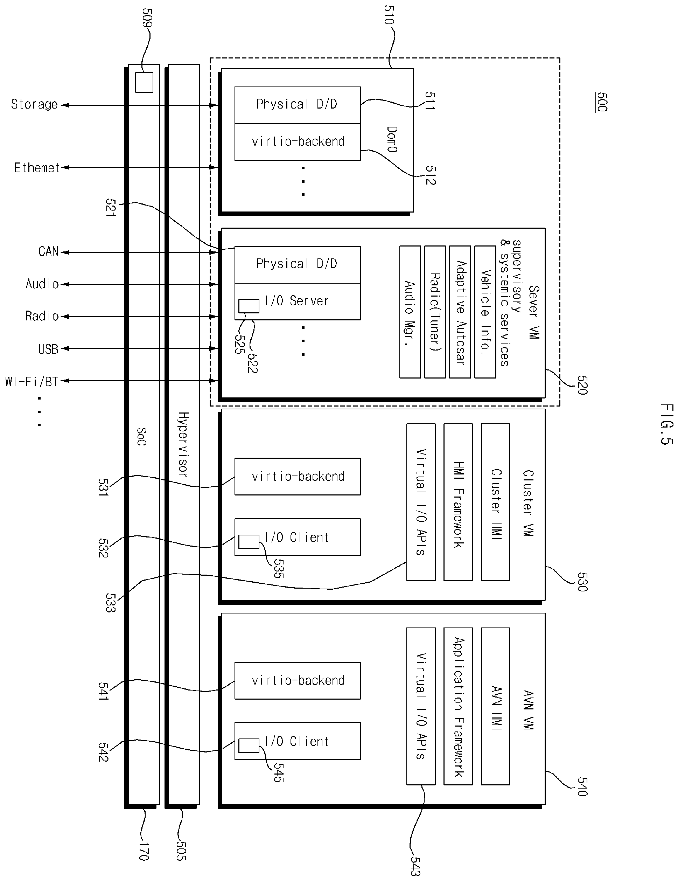

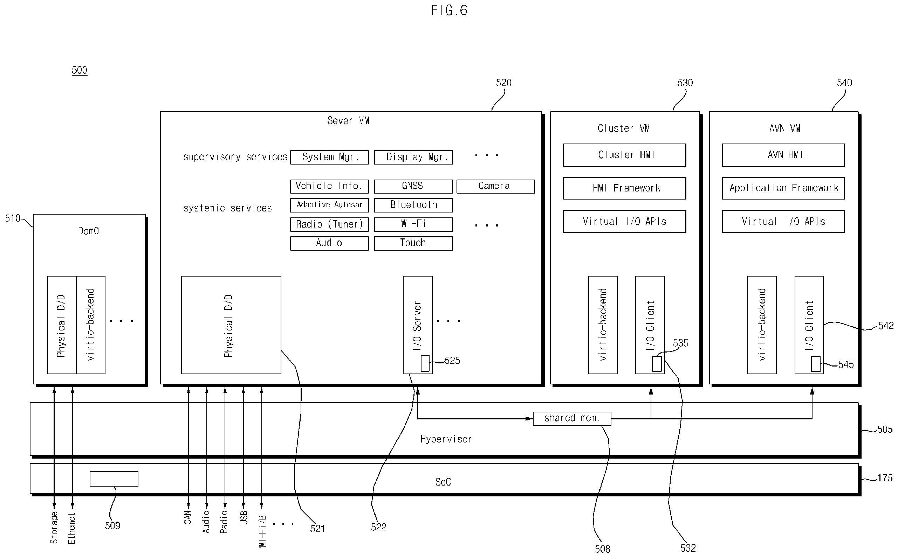

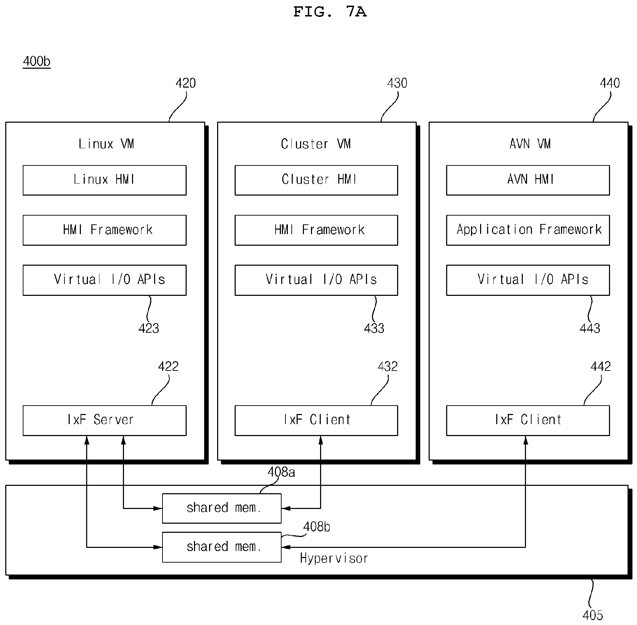

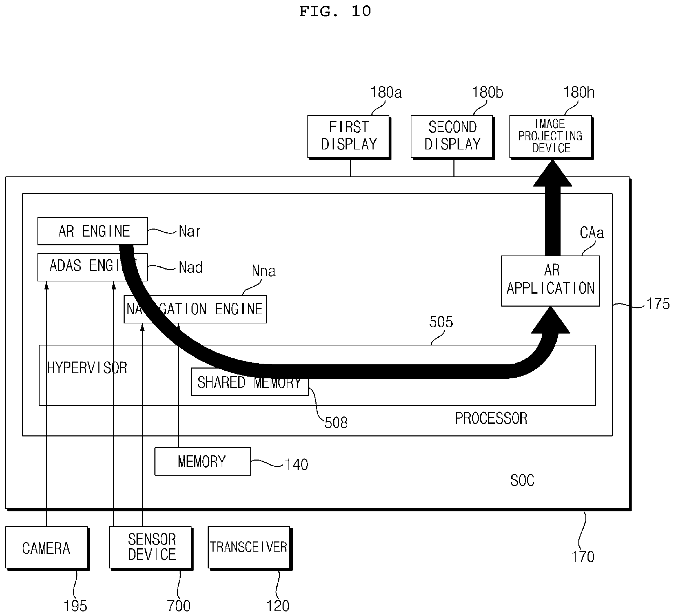

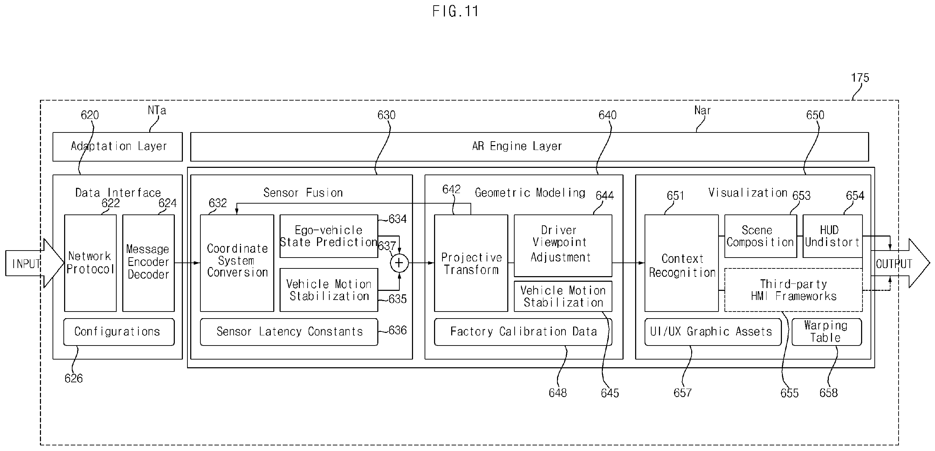

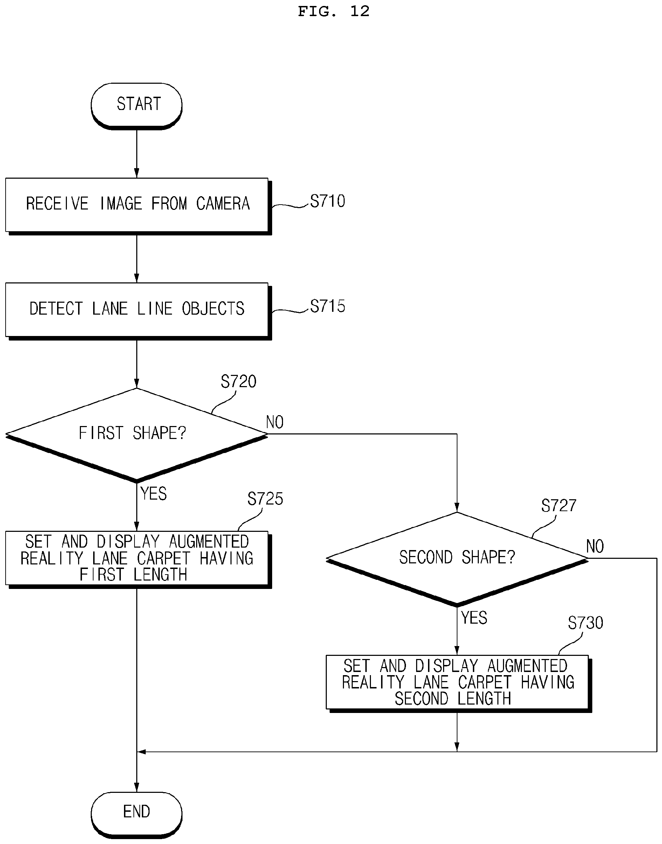

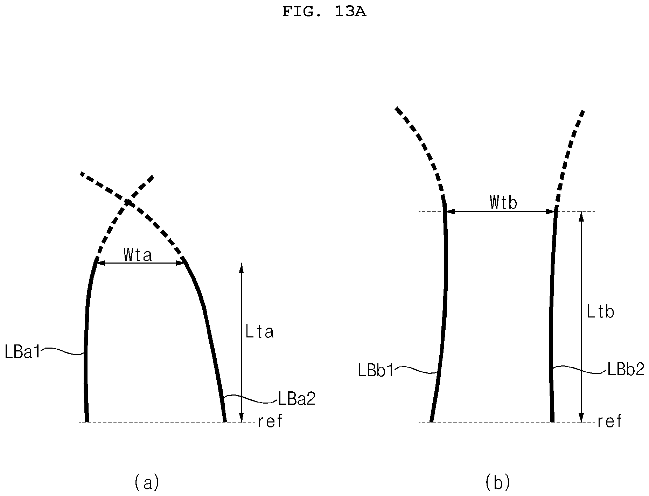

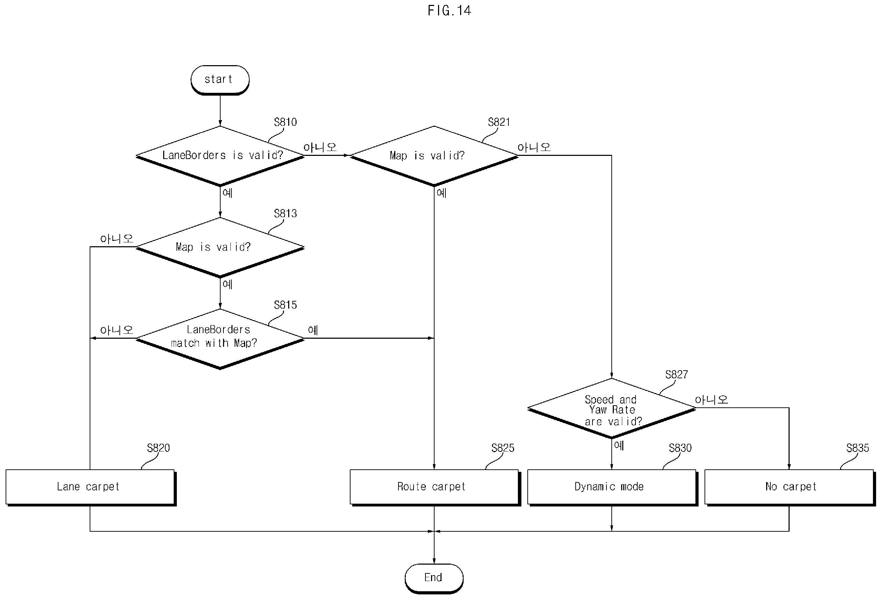

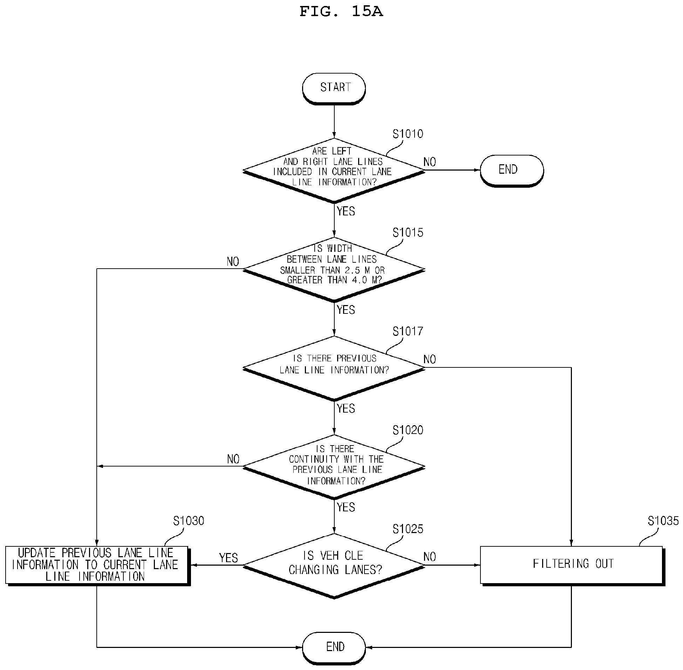

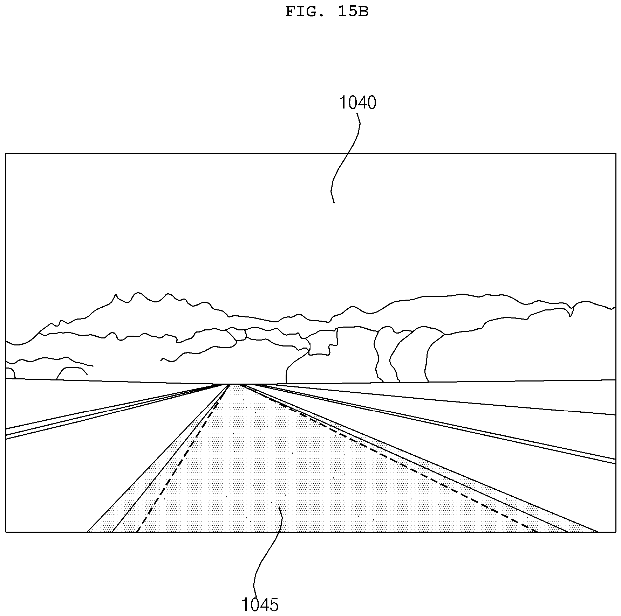

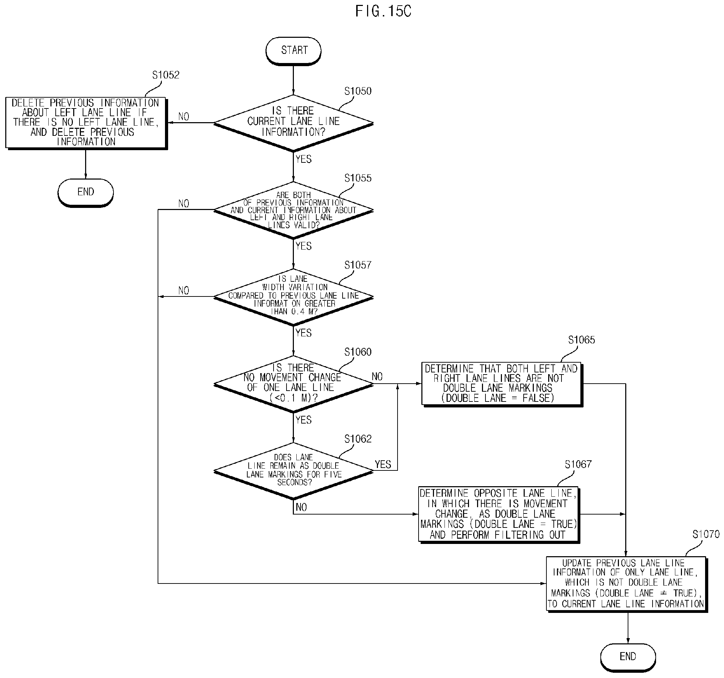

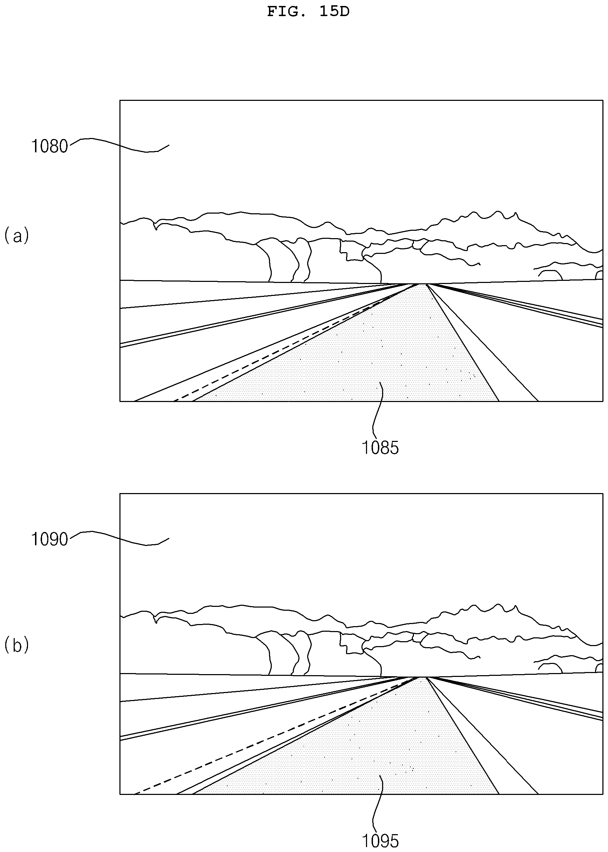

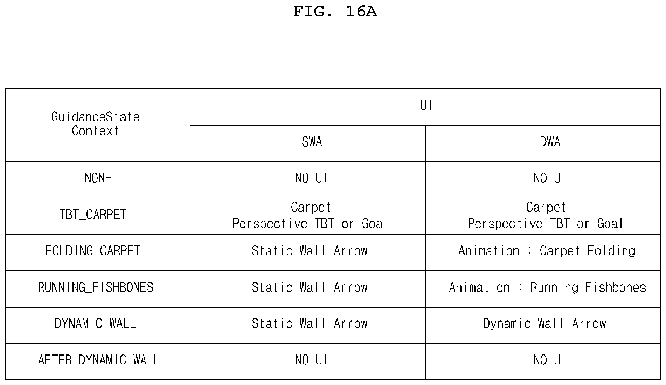

. FIG. 1 is a view showing an example of the exterior and interior of a vehicle;
. FIG. 2 is a view showing the external appearance of a display apparatus for vehicles according to an embodiment of the present disclosure;
. FIG. 3 illustrates an example of an internal block diagram of the display apparatus for vehicles of FIG. 2;
. FIG. 4 is a view showing a system driven in a signal processing device related to the present disclosure;
. FIG. 5 is a view showing an example of a system driven in a signal processing device according to an embodiment of the present disclosure;
. FIG. 6 is a view referred to in the description of operation of the system driven in the signal processing device according to the embodiment of the present disclosure;
. FIGS. 7A to 9D are diagrams referred to in the description of FIG. 5 or FIG. 6;
. FIG. 10 is an exemplary internal block diagram of a signal processing device according to an embodiment of the present disclosure;
. FIG. 11 is an exemplary internal block diagram of a processor of FIG. 10;
. FIG. 12 is a flowchart illustrating a method of operating a signal processing device according to an embodiment of the present disclosure;
. FIGS. 13A to 13G are diagrams referred to in the description of FIG. 12;
. FIG. 14 is a flowchart illustrating a method of operating a signal processing device according to another embodiment of the present disclosure;
. FIG. 15A is a flowchart illustrating a method of operating a signal processing device according to yet another embodiment of the present disclosure;
. FIG. 15B is a diagram referred to in the description of FIG. 15A;
. FIG. 15C is a flowchart illustrating a method of operating a signal processing device according to yet another embodiment of the present disclosure;
. FIG. 15D is a diagram referred to in the description of FIG. 15C; and
. FIGS. 16A to 19 are diagrams referred to in the description of operation of the signal processing device of FIG. 10.

### DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1 is a view showing an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 can be provided with a camera 195 configured to acquire an image of the front of the vehicle.

. Meanwhile, the vehicle 200 can be provided therein with a plurality of displays 180a and 180b configured to display images, information, etc., and an image projecting device 180h configured to project an image onto a windshield WS.

. In FIG. 1, a cluster display 180a and an audio video navigation (AVN) display 180b are illustrated as the plurality of displays 180a and 180b, and a head-up display (HUD) is illustrated as the image projecting device 180h.

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIG. 2 is a view showing the external appearance of a display apparatus for vehicles according to an embodiment of the present disclosure.

. A display apparatus 100 for vehicles (hereinafter referred to as a vehicle display apparatus) according to an embodiment of the present disclosure may include a plurality of displays 180a and 180b, an image projecting device 180h, and a signal processing device 170 configured to perform signal processing for displaying images, information, and the like on the plurality of displays 180a and 180b and the image projecting device 180h.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The image projecting device 180h, which is a head-up display (HUD), may include an optical device (not shown) for image projection.

. The signal processing device 170 may include a shared memory 508 and a processor 175, and may be configured to execute first to third virtual machines 520 to 540 on a hypervisor 505 in the processor 175.

. The first virtual machine 520, which is a server virtual machine, may control a second virtual machine 530 and a third virtual machine 50 which are guest virtual machines.

. Meanwhile, the second virtual machine may be referred to as a first guest virtual machine, and the third virtual machine may be referred to as a second guest virtual machine.

. The first guest virtual machine 530 may operate for the first display 180a, and the second guest virtual machine 540 may operate for the second display 180b.

. Meanwhile, the server virtual machine 520 in the processor 715 may be configured to set up the shared memory 508 based on the hypervisor 505 for transmission of identical data to the first guest virtual machine 530 and the second guest virtual machine 540. Accordingly, the first display 180a and the second display 180b in a vehicle may be configured to display identical information or identical images in a synchronized manner.

. Meanwhile, the server virtual machine 520 in the processor 175 may be configured to receive and process wheel speed sensor data of the vehicle, and transmit the processed wheel speed sensor data to at least one of the first guest virtual machine 530 or the second guest virtual machine 540. Accordingly, at least one virtual machine may share the wheel speed sensor data of the vehicle.

. Accordingly, it is possible to control various displays 180a and 180b and the image projecting device 180h by using the single signal processing device 170.

. Meanwhile, some of the plurality of displays 180a to 180b may be operated based on a Linux Operating System (OS), and others may be operated based on a Web Operating System (OS).

. The signal processing device 170 according to the embodiment of the present disclosure may control the displays 180a to 180b, operating under various operating systems, to also display identical information or identical images in a synchronized manner.

. FIG. 3 illustrates an example of an internal block diagram of the display apparatus for vehicles according to the embodiment of the present disclosure.

. Referring to FIG. 3, the vehicle display apparatus 100 according to the embodiment of the present disclosure may include an input device 110, a transceiver 120, an interface 130, a memory 140, a signal processing device 170, a plurality of displays 180a to 180b, an image projecting device 180h, an audio output device 185, and a power supply 190.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server (not shown).

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may be configured to receive weather information and road traffic situation information, such as transport protocol expert group (TPEG) information, from the mobile terminal 800 or the server (not shown). To this end, the transceiver 120 may include a mobile communication module (not shown).

. The interface 130 may be configured to receive sensor information from an electronic control unit (ECU) 770 or a sensor device 750, and transmit the received information to the signal processing device 170.

. Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

. The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

. Meanwhile, the interface 130 may be configured to receive front-of-vehicle image data, side-of-vehicle image data, rear-of-vehicle image data, and obstacle-around-vehicle distance information from a camera 195 or lidar (not shown), and transmit the received information to the signal processing device 170.

. The memory 140 may store various data necessary for overall operation of the display apparatus 100 for vehicles, such as programs for processing or control of the signal processing device 170.

. For example, the memory 140 may store data about the hypervisor, the server virtual machine 520, and the plurality of guest virtual machines which are to be executed in the processor 175.

. The audio output device 185 may be configured to convert an electrical signal from the signal processing device 170 into an audio signal, and output the audio signal. To this end, the audio output device 185 may include a speaker and the like.

. The power supply 190 may supply power necessary to operate components under control of the signal processing device 170. In particular, the power supply 190 may be configured to receive power from a battery in the vehicle.

. The image projecting device 180h includes an optical device (not shown) for image projection and may be controlled by the signal processing device 170 to output an augmented reality-based object.

. For example, the image projecting device 180h may output an augmented reality lane carpet, or an augmented reality route carpet, or an augmented reality dynamic carpet, which corresponds to a lane image.

. The signal processing device 170 may control the overall operation of each unit in the vehicle display apparatus 100.

. For example, the signal processing device 170 may include the shared memory 508 and the processor 175 configured to perform signal processing for the displays 180a and 180b.

. The processor 175 may be configured to execute the hypervisor 505 (see FIG. 5), and execute the server virtual machine 520 and the plurality of guest virtual machines 530 and 540 on the hypervisor 505 that runs (see FIG. 5).

. In this case, the first guest virtual machine 530 may operate for the first display 180a, and the second guest virtual machine 540 may operate for the second display 180b.

. For example, the server virtual machine 520 in the processor 715 may be configured to receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

. In another example, the server virtual machine 520 may directly receive and process CAN communication data, audio data, radio data, USB data, and wireless communication data for the first and second guest virtual machines 530 and 540.

. Further, the server virtual machine 520 may be configured to transmit the processed data to the first and second guest virtual machines 530 and 540.

. Accordingly, among the server virtual machine 520 and the plurality of guest virtual machines 530 and 540, only the server virtual machine 520 may be configured to receive communication data and external input data and perform signal processing, whereby load in signal processing by the other virtual machines may be reduced and 1:N data communication may be achieved, and therefore synchronization at the time of data sharing may be achieved.

. Meanwhile, the server virtual machine 520 may be configured to write data in the shared memory 508, whereby the first guest virtual machine 530 and the second guest virtual machine 540 share identical data.

. For example, the server virtual machine 520 may be configured to write vehicle sensor data, the position information data, the camera image data, or the touch input data in the shared memory 508, whereby the first guest virtual machine 530 and the second guest virtual machine 540 share identical data. Accordingly, 1:N data sharing may be achieved.

. As a result, the server virtual machine 520 may process most of the data, thereby allowing 1:N data sharing.

. Meanwhile, the server virtual machine 520 in the processor 175 may be configured to set up the shared memory 508 based on the hypervisor 505 for transmission of identical data to the first guest virtual machine 530 and the second guest virtual machine 540.

. That is, the server virtual machine 520 in the processor 175 may be configured to transmit identical data to the first guest virtual machine 530 and the second guest virtual machine 540 in a synchronized manner by using the shared memory 508 based on the hypervisor 505. Accordingly, the plurality of displays 180a and 180b in the vehicle may be configured to display identical images in a synchronized manner.

. Meanwhile, the signal processing device 170 may process various signals, such as an audio signal, an image signal, and a data signal. To this end, the signal processing device 170 may be implemented in the form of a system on chip (SOC).

. FIG. 4 is a view showing a system driven in a signal processing device related to the present disclosure.

. Referring to the figure, FIG. 4 is a view illustrating that virtual machines are used for the cluster display 180a and the AVN display 180b.

. The system 400 driven in the signal processing device of FIG. 4 illustrates that a cluster virtual machine 430 and an AVN virtual machine 440 are executed through a hypervisor 405 in the processor 175.

. Meanwhile, the system 400 driven in the signal processing device of FIG. 4 illustrates that a legacy virtual machine 410 is also executed on the hypervisor 405 in the processor 175.

. The legacy virtual machine 410 may include an interface 412 for data communication with the memory 140 and an interface 413 for Ethernet communication.

. Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

. Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

. In the system 400, there is a disadvantage in that CAN communication data are input and output only in the cluster virtual machine 430, whereby the CAN communication data cannot be utilized in the AVN virtual machine 440.

. Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

. Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

. Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

. FIG. 5 is a view showing an example of a system running on a signal processing device according to an embodiment of the present disclosure.

. Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

. The first guest virtual machine 530 may be a virtual machine for the cluster display 180a, and the second guest virtual machine 540 may be a virtual machine for the AVN display 180b.

. That is, the first guest virtual machine 530 and the second guest virtual machine 540 may be operated for image rendering of the cluster display 180a and the AVN display 180b, respectively.

. Meanwhile, it is also illustrated that in the system 500 running on the signal processing device 170 of FIG. 5, a legacy virtual machine 510 is also executed on the hypervisor 505 in the processor 175.

. The legacy virtual machine 510 may include an interface 511 for data communication and Ethernet communication with the memory 140.

. Meanwhile, the legacy virtual machine 510 may further include a virtio-backend interface 512 for data communication with the first and second guest virtual machines 530 and 540.

. The server virtual machine 520 may include an interface 521 for input and output of audio data, radio data, USB data, and wireless communication data, and an input and output server interface 522 for data communication with the guest virtual machines.

. That is, the server virtual machine 520, which is a server virtual machine, may be configured to provide inputs/outputs (I/O) difficult to virtualize with standard virtualization technology (VirtIO) to a plurality of guest virtual machines, e.g., the first and second guest virtual machines 530 and 540.

. Meanwhile, the server virtual machine 520, which is a server virtual machine, may be configured to control radio data and audio data at a supervisor level, and provide the data to a plurality of guest virtual machines, e.g., the first and second guest virtual machines 530 and 540, and the like.

. Meanwhile, the server virtual machine 520, which is a server virtual machine, may be configured to process vehicle data, sensor data, and surroundings-of-vehicle information, and provide the processed data or information to a plurality of guest virtual machines, e.g., the first and second guest virtual machines 530 and 540, and the like.

. Meanwhile, the server virtual machine 520 may be configured to provide supervisory services, such as processing of vehicle data and audio routing management, and the like.

. Next, the first guest virtual machine 530 may include an input and output client interface 532 for data communication with the server virtual machine 520 and APIs 533 configured to control the input and output client interface 532.

. In addition, the first guest virtual machine 530 may include a virtio-backend interface for data communication with the legacy virtual machine 510.

. The first guest virtual machine 530 may be configured to receive memory data by communication with the memory 140 and Ethernet data by Ethernet communication from the virtio-backend interface 512 of the legacy virtual machine 510 through the virtio-backend interface.

. Next, the second guest virtual machine 540 may include an input and output client interface 542 for data communication with the server virtual machine 520 and APIs 543 configured to control the input and output client interface 542.

. In addition, the second guest virtual machine 540 may include a virtio-backend interface for data communication with the legacy virtual machine 510.

. The second guest virtual machine 540 may be configured to receive memory data by communication with the memory 140 and Ethernet data by Ethernet communication from the virtio-backend interface 512 of the legacy virtual machine 510 through the virtio-backend interface.

. Meanwhile, unlike FIG. 5, the legacy virtual machine 510 can be provided in the server virtual machine 520.

. In the system 500, CAN communication data, such as sensing data, are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Also, in the system 500 of FIG. 5, audio data, radio data, USB data, and wireless communication data are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Meanwhile, in the system 500 of FIG. 5, the first and second guest virtual machines 530 and 540 may operate on different operating systems.

. For example, the first guest virtual machine 540 may operate on Linux OS, and the second guest virtual machine 540 may operate on a Web-based OS.

. In the server virtual machine 520, the shared memory 508 based on the hypervisor 505 may be configured to be set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may be configured to display identical data or identical images in a synchronized manner.

. FIG. 6 is a diagram referred to in the description of operation of a system running on a signal processing device according to the embodiment of the present disclosure, and FIGS. 7A to 9D are diagrams referred to in the description of FIG. 5 or FIG. 6.

. First, in the system 500 of FIG. 6, the processor 175 in the signal processing device 170 may be configured to execute the server virtual machine 520 and the plurality of guest virtual machines 530 and 540 on the hypervisor 505 in the processor 175, and the server virtual machine 520 in the processor 175 may be configured to set up the shared memory 508 based on the hypervisor 505 for data transmission to the first and second guest virtual machines 530 and 540.

. For example, as an example of identical data, identical image data may be transmitted from the server virtual machine 520 to the first guest virtual machine 530 and the second guest virtual machine 540. Accordingly, the plurality of displays 180a and 180b in the vehicle may be configured to display identical images in a synchronized manner.

. Meanwhile, in the system 500 of FIG. 6, the processor 175 in the signal processing device 170 may be configured to execute the server virtual machine 520 and the plurality of guest virtual machines 530 and 540 on the hypervisor 505 in the processor 175, and the server virtual machine 520 in the processor 175 may be configured to transmit identical data to the first and second guest virtual machines 530 and 540 in a synchronized manner by using the shared memory 508 based on the hypervisor 505.

. For example, examples of identical data may include CAN communication data, audio data, radio data, USB data, wireless communication data, position information data, or touch data, and the like. Accordingly, the plurality of displays 180a and 180b in the vehicle may be configured to display identical data in a synchronized manner.

. Meanwhile, the server virtual machine 520 in the processor 175 may be configured to receive and process position information data that changes according to movement, and provide the processed data to the first guest virtual machine 530 or the second guest virtual machine 540. Accordingly, instead of 1:1 data communication, 1:N data communication between the virtual machines may be achieved by using the shared memory.

. Meanwhile, the first guest virtual machine 530 and the second guest virtual machine 540 may be driven by different operating systems. Accordingly, even when the plurality of virtual machines are driven by different operating systems, high-speed data communication may be performed.

. Meanwhile, although not illustrated in FIG. 6, the legacy virtual machine 510 may be configured to transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data may be performed. Accordingly, identical data may be transmitted in a synchronized manner.

. Meanwhile, the server virtual machine 520 in the processor 175 may be configured to execute supervisory services, such as a system manager, a display manager, and the like.

. Meanwhile, the server virtual machine 520 in the processor 175 may be configured to execute systemic services, such as vehicle information service, position information service, camera service, AUTOSAR, Bluetooth communication service, radio service, Wi-Fi service, audio service, touch service, and the like.

. FIG. 7A is a diagram illustrating an example of three virtual machines 420, 420, and 430 operating on a system 400b of FIG. 4.

. Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

. For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

. If a separate shared memory is used for transmitting the same first data as illustrated in FIG. 7A, there is a drawback in that resources are wasted and synchronization is not easy.

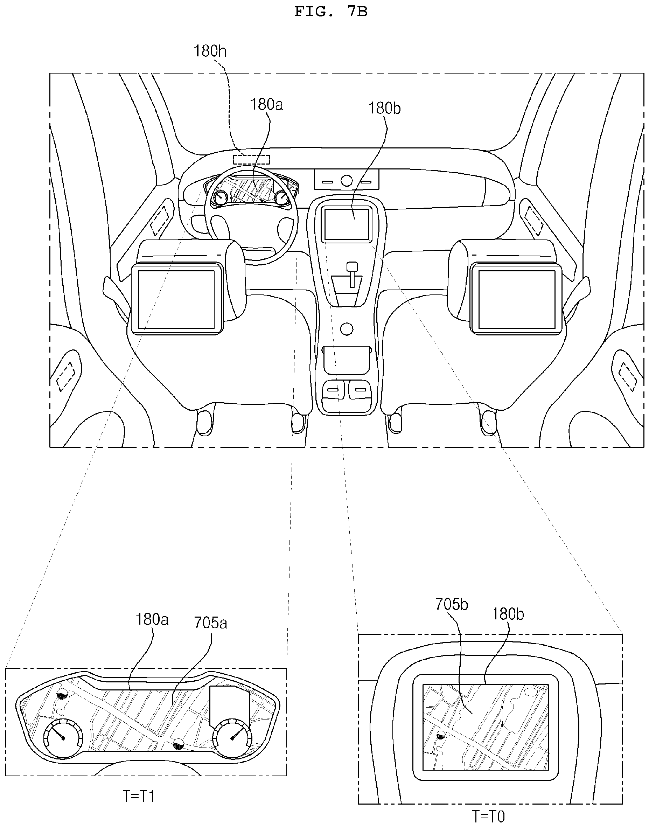

. FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

. FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

. As described above, if the first virtual machine 520 and 420 transmits identical image data by using the separate shared memory as illustrated in FIG. 7A, there is a drawback in that images may not be displayed in a synchronized manner as illustrated in FIG. 7B.

. In order to solve this problem, the present disclosure proposes a scheme for allocating a single shared memory at the time of transmission of identical data. Consequently, 1:N data communication is performed, whereby synchronized data transmission is achieved.

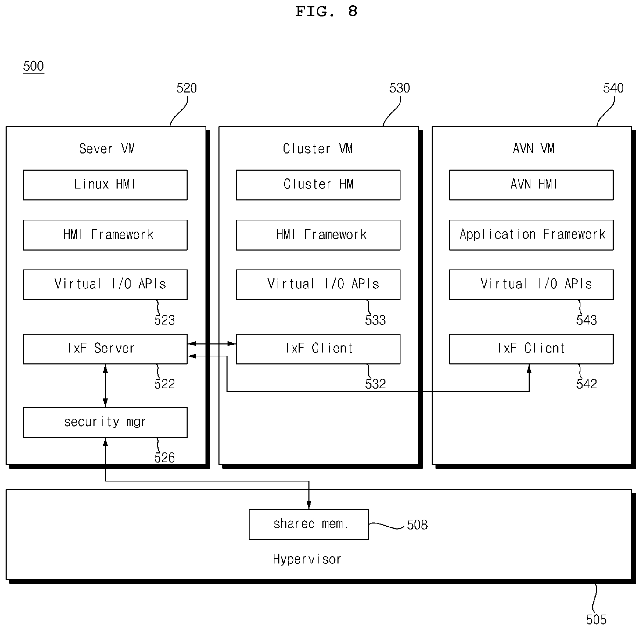

. FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

. Accordingly, the plurality of displays 180a and 180b in the vehicle may be configured to display identical images in a synchronized manner.

. Meanwhile, high-speed data communication may be performed among the plurality of virtual machines 520, 530, and 540. Further, high-speed data communication may be performed even when the plurality of virtual machines 520, 530, and 540 are driven by different operating systems.

. Meanwhile, the server virtual machine 520 in the processor 175 may be configured to transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines may be achieved by using the shared memory 508.

. Meanwhile, the server virtual machine 520 in the processor 175 may include the input and output server interface 522 and a security manager 526.

. Meanwhile, the first guest virtual machine 530 and the second guest virtual machine 540 may include input and output client interfaces 532 and 542, respectively. Accordingly, high-speed data communication between the plurality of virtual machines may be performed by using the input and output server interface 522 and the input and output client interfaces 532 and 542.

. The input and output server interface 522 in the first virtual machine 520 may be configured to receive requests for transmission of identical data from the respective input and output client interfaces 532 and 542 in the first guest virtual machine 530 and the second guest virtual machine 540, and transmit shared data to the shared memory 508 through the security manager 526 based thereon.

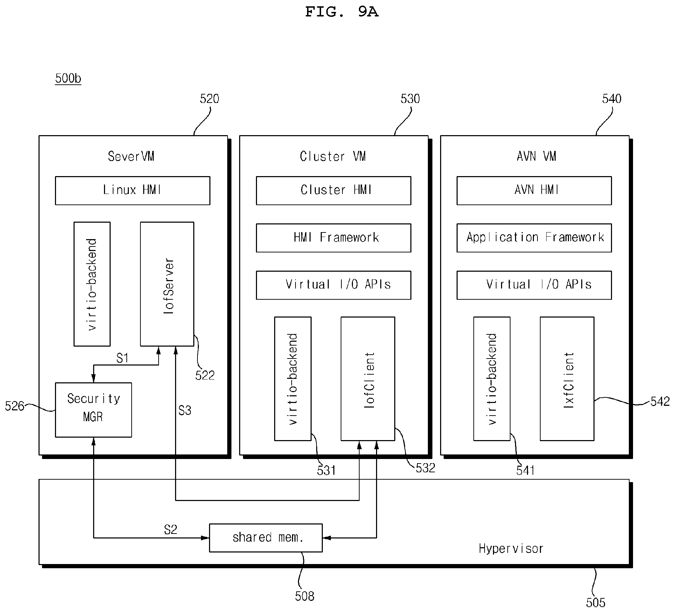

. FIG. 9A is a diagram illustrating in further detail transmission of shared data.

. Referring to the figure, in order to transmit shared data, the input and output server interface 522 in the server virtual machine 520 transmits a request for allocation of the shared memory 508 to the security manager 526 (S1).

. Subsequently, the security manager 526 may be configured to allocate the shared memory 508 using the hypervisor 505 (S2), and write shared data in the shared memory 508.

. Meanwhile, the input and output client interfaces 532 and 542 may be configured to transmit a request for connection to the input and output server interface 522 after allocation of the shared memory 508 (S3).

. Meanwhile, after allocation of the shared memory 508, the input and output server interface 522 transmits information regarding the shared memory 508 including key data to the input and output client interfaces 532 and 542 (S4). In this case, the key data may be data for data access.

. That is, after setting up the shared memory 508, the server virtual machine 520 in the processor 175 may be configured to transmit information regarding the shared memory 508 to the first guest virtual machine 530 and the second guest virtual machine 540.

. The input and output client interfaces 532 and 542 may be configured to access the shared memory 508 based on the received key data (S5), and copy the shared data from the shared memory 508.

. Accordingly, the first guest virtual machine 530 and the second guest virtual machine 540 may access the shared memory 508, and thus, may share the shared data.

. For example, in the case in which the shared data are image data, the first guest virtual machine 530 and the second guest virtual machine 540 may share the image data, and thus, the plurality of displays 180a and 180b in the vehicle may be configured to display the same shared image in a synchronized manner.

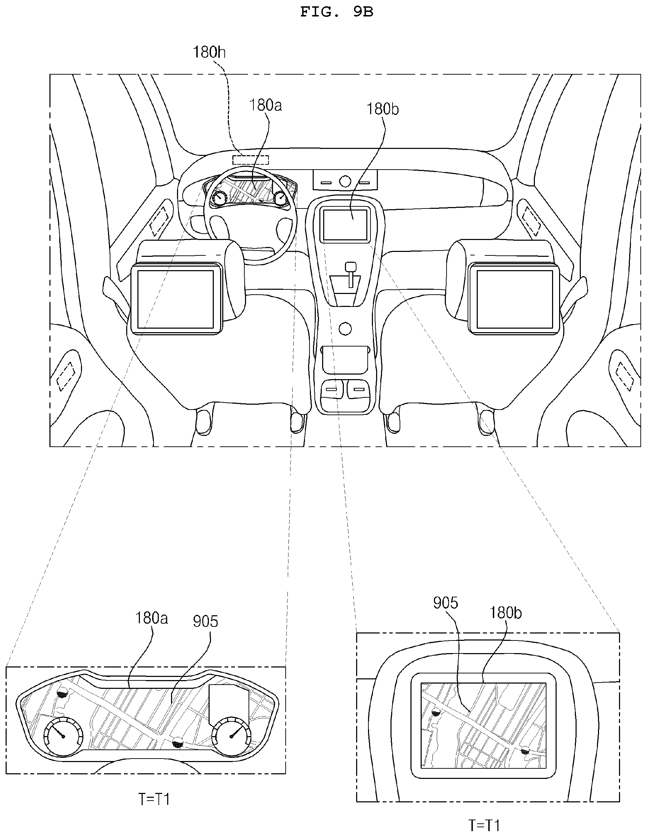

. FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

. FIG. 9B illustrates that an image 905 displayed on the first display 180a and an image 905 displayed on the second display 180b are synchronized, such that the same image may be displayed.

. That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may be configured to display the same images in a synchronized manner. Further, high-speed data communication among the plurality of virtual machines 520, 530, and 540 may be performed.

. FIG. 10 is an exemplary internal block diagram of a signal processing device according to an embodiment of the present disclosure.

. Referring to FIG. 10, the signal processing device 170 according to an embodiment of the present disclosure may be configured to receive a signal from each of the camera 195, the sensor device 700, and the transceiver 120, and perform signal processing to output an image signal to the first display 180a or the second display 180b or the image projecting device 1810c.

. The signal processing device 170 may include a memory 140 configured to store data for an augmented reality lane carpet, and a processor 175 configured to detect lane line object based on an image from the camera 195.

. Meanwhile, as described above, the processor 175 may be configured to execute the hypervisor 505, and set the shared memory 508 based on the executed hypervisor 505.

. Meanwhile, the processor 175 may be configured to execute an Advanced Driver Assistance System (ADAS) engine Nad based on the image from the camera 195 and the sensing signal from the sensor device 700.

. By executing the ADAS engine Nad, the processor 175 may be configured to detect objects at the front, rear, and sides of the vehicle.

. Particularly, by executing the ADAS engine Nad, the processor 175 may be configured to detect a preceding vehicle object or lane line object in front of the vehicle.

. Meanwhile, the processor 175 may be configured to execute an Advanced Reality (AR) engine Nar based on the image from the camera 195 and the sensing signal from the sensor device 700.

. By executing the AR engine Nar, the processor 175 may be configured to detect objects at the front, rear, and sides of the vehicle.

. Particularly, by executing the AR engine Nar, the processor 175 may be configured to detect a preceding vehicle object or lane line object in front of the vehicle.

. Meanwhile, the processor 175 may be configured to execute a navigation engine Nna based on the sensing signal from the sensor device 700 and the map data from the memory 140.

. By executing the navigation engine Nna, the processor 175 may generate guide information related to vehicle traveling and the like.

. Particularly, by executing the navigation engine Nna, the processor 175 may generate guide information related to vehicle traveling.

. Meanwhile, the processor 175 may be configured to execute an AR application CAa for the first display 180a, the second display 180b, or the image projecting device 180c.

. Particularly, the processor 175 may be configured to execute the AR application CAa for the image projecting device 180c.

. In this case, the AR application CAa may be configured to receive data about the object, detected by executing the AR engine Nar, via the shared memory 508.

. Meanwhile, the AR application CAa in the processor 175 may be configured to set and display an augmented reality lane carpet corresponding to a lane image, based on a shape of the detected lane line object. Accordingly, an augmented reality-based lane guide corresponding to a lane shape can be provided.

. FIG. 11 is an exemplary internal block diagram of the processor of FIG. 10.

. Referring to FIG. 11, the processor 170 may include a data interface NTa configured to receive an image from the camera 195 or a sensing signal from the sensor device 700, and an augmented reality (AR) engine Nar configured to output an augmented reality lane carpet ICPa with a first length Lta or an augmented reality lane carpet ICPb with a second length Ltb, based on the image from the camera 195.

. Meanwhile, the AR engine Nar may be configured to execute sensor fusion based on the image from the camera 195, may perform geometric modeling based on a result of performing the sensor fusion, and perform visualization based on a result of the modeling.

. To this end, the AR engine Nar may include a sensor fusion processor 630, a geometric modeling processor 640, and a visualization processor 650.

. A Network Protocol block 622 in the data interface NTa may implement network protocols of various vehicle sensor data transmitted to the AR engine Nar. In this case, the network protocols may be protocols such as SOME/IP, CAN, Ethernet, and the like.

. A Message Encoder/Decoder 624 in the data interface NTa may be configured to decode encoded binary packets, which are regularly received from the sensor device 700 or a gateway (not shown), and extract a numeric value which is an original message value.

. Meanwhile, a Message Encoder/Decoder 624 in the data interface NTa may be configured to add a timestamp of the received time to the decoded data, and transmit the data, having the timestamp added thereto, to the sensor fusion processor 630.

. A Configurations block 626 in the data interface NTa may be configured to manage a life cycle of the AR application CAa, set which window will display AR content, or manage a window system, an event-driven configuration setting message, or an AR function ON/OFF configuration setting, or turn on or off augmented reality-based graphical overlays, or manage a Light/Dark Mode of a graphical user interface, or change a color tone of an augmented reality lane carpet.

. The sensor fusion processor 630 may be configured to receive decoded, Time-tagged sensor data from the data interface NTa.

. A Coordinate System Conversion Block 632 in the sensor fusion processor 630 may be configured to convert coordinates of all input sensor messages into a vehicle reference coordinate system by using a transformation matrix.

. An Ego-vehicle State Prediction Block 634 in the sensor fusion processor 630 may compensate for latency in each sensor data.

. To this end, the Ego-vehicle State Prediction Block 634 in the sensor fusion processor 630 may be configured to remove noise from time-series sensor data and perform Kalman filtering and the like.

. A Vehicle Motion Stabilization Block 635 in the sensor fusion processor 630 may be configured to compensate for vehicle motion caused by uneven surfaces on the road and vehicle suspension.

. Meanwhile, a Sensor Latency Constants Block 637 in the sensor fusion processor 630 may be configured to transmit center of gravity position offset data from the vehicle reference coordinate system to the Vehicle Motion Stabilization Block.

. Meanwhile, result data of the Ego-vehicle State Prediction Block 634 and result data of the Vehicle Motion Stabilization Block 635 may be summed together by an adder 637 to be output to the geometric modeling processor 640.

. A projective transform Block 642 in the geometric modeling processor 640 may be configured to receive the result data from the sensor fusion processor 630 and performs transformation for image projection.

. A driver viewpoint adjustment Block 644 in the geometric modeling processor 640 may be configured to detect the position of a driver's eyes based on an image from an in-vehicle camera, and adjust a projection position based on the position of the eyes.

. Meanwhile, an occlusion clipping Block 646 in the geometric modeling processor 640 may be configured to perform clipping on the projected image.

. A factory calibration data Block 646 in the geometric modeling processor 640 may be configured to provide calibration data to the projective transform Block 642 or the river viewpoint adjustment Block 644, or the occlusion clipping Block 646.

. The visualization processor 650 may be configured to receive the result data from the geometric modeling processor 640, and output various images based on augmented reality.

. A context recognition Block 651 in the visualization processor 650 may be configured to receive the result data from the geometric modeling processor 640, and perform context recognition.

. A scene composition Block 653 in the visualization processor 650 may be configured to perform scene composition based on the data from the context recognition Block 651.

. A HUD undistort Block 654 in the visualization processor 650 may be configured to receive image data, which is signal-processed data with reduced distortion, from the scene composition Block 653.

. A Third-party HMI frameworks Block 655 in the visualization processor 650 may be configured to add framework data to the data from the context recognition Block 651, and output the added data.

. A UI/UX graphic assets Block 657 in the visualization processor 650 may be configured to provide data for UI/UX of the output image data.

. A Warping table Block 659 in the visualization processor 650 may be configured to provide Warping table data to units in the visualization processor 650.

. FIG. 12 is a flowchart illustrating a method of operating a signal processing device according to an embodiment of the present disclosure.

. Referring to FIG. 12, the processor 175 in the signal processing device 170 receives an image from the camera 195 (S710).

. Then, the processor 175 in the signal processing device 170 detects lane line object based on the image from the camera 195 (S715).

. For example, the processor 175 in the signal processing device 170 may be configured to detect lane line object, including two lane borders, in the image from the camera 195.

. Meanwhile, in addition to the lane line object, the processor 175 in the signal processing device 170 may also detect a preceding vehicle object in the image from the camera 195.

. Then, the processor 175 in the signal processing device 170 determines whether the detected lane line object have a first shape (S720), and if so, the processor 175 sets and displays an augmented reality lane carpet with a first length (S725).

. In this case, the first shape may correspond to a shape in which a width between the detected lane line object decreases.

. Meanwhile, in the case in which the detected lane line object do not have the first shape in operation 720 (S720), the processor 175 in the signal processing device 170 determines whether the detected lane line object have a second shape (S727), and if so, the processor 175 sets and displays an augmented reality lane carpet with a second length (S730).

. In this case, the second shape may correspond to a shape in which a width between the detected lane line object increases or remains constant.

. In this embodiment of the present disclosure, a length of the augmented reality lane carpet may be configured to be changed based on the detected lane line object.

. For example, based on the second shape in which a width between the detected lane line object is greater than the first shape, the processor 175 in the signal processing device 170 according to an embodiment of the present disclosure may be configured to set and display an augmented reality lane carpet with the second length greater than the first length. Accordingly, an augmented reality-based lane guide corresponding to a lane shape can be provided.

. That is, the memory 140 according to an embodiment of the present disclosure may store data for lane images, and if the detected lane line object have the first shape, the processor 175 may be configured to display a lane image with the first length, and if the detected lane line object have the second shape, the processor 175 may be configured to display a lane image with the second length. Accordingly, an augmented reality-based lane guide corresponding to a lane shape can be provided.

. FIGS. 13A to 13G are diagrams referred to in the description of FIG. 12.

. FIG. 13A is a diagram illustrating a first shape in which a width between detected lane line object decreases, and a second shape in which the width between the detected lane line object increases.

. Referring to FIG. 13A, (a) illustrates an example in which a width between detected lane line object LBa1 and LBa2 decreases away from a vehicle position which is a reference line ref.

. A lane shape in (a) of FIG. 13A may be referred to as an x-line shape.

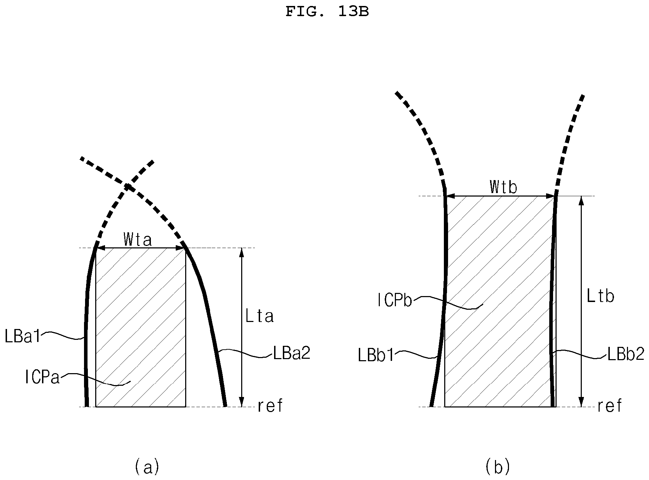

. In FIG. 13A, (b) illustrates an example in which a width between detected lane line object LBb1 and LBb2 increases away from a vehicle position which is a reference line ref.

. A lane shape in (b) of FIG. 13A may be referred to as a v-line shape.

. In the case in which a lane width decreases as illustrated in (a) of FIG. 13A, it may be complicated to determine a length of an augmented reality lane carpet.

. Similarly, in the case in which a lane width increases as illustrated in (b) of FIG. 13A, it may be complicated to determine the length of an augmented reality lane carpet.

. Accordingly, in the present disclosure, the length of the augmented reality lane carpet is set differently for the case in which the lane width decreases and the case in which the lane width increases, which will be described below with reference to FIG. 13B.

. FIG. 13B is a diagram illustrating an augmented reality lane carpet determined based on the detected lane line object of FIG. 13A.

. Referring to FIG. 13B, in the case in which the detected lane line object LBa1 LBa2 have the first shape, the processor 175 according to an embodiment of the present disclosure sets and displays an augmented reality lane carpet ICPa with a first length Lta, as illustrated in (a) of FIG. 13B.

. Particularly, based on the first shape in which a width between the detected lane line object LBa1 and LBa2 decreases, and in the case in which the width between the detected lane line object LBa1 and LBa2 has a first reference value Wta, the processor 175 according to an embodiment of the present disclosure may be configured to set a length corresponding to the first reference value Wta to be a first length Lta. In this case, the first reference value Wta may be a width of approximately 1.5 m.

. Meanwhile, based on the second shape in which a width between the detected lane line object LBb1 and LBb2 is greater than the first shape, the processor 175 according to an embodiment of the present disclosure sets and displays an augmented reality lane carpet ICPb with a second length Ltb greater than the first length Lta, as illustrated in (b) of FIG. 13B.

. Particularly, based on the second shape in which a width between the detected lane line object LBb1 and LBb2 increases, and in the case in which the width between the detected lane line object LBb1 and LBb2 has a second reference value Wtb, the processor 175 according to an embodiment of the present disclosure may be configured to set a length corresponding to the second reference value Wtb to be a second length Ltb. In this case, the second reference value Wtb may be a value greater than the first reference value Wta and may be a width of approximately 3.5 m. Accordingly, an augmented reality-based lane guide corresponding to a lane shape can be provided.

. Meanwhile, when a vehicle stops, the processor 175 according to an embodiment of the present disclosure may be configured to stop displaying the augmented reality lane carpet ICPa with the first length Lta or the augmented reality lane carpet ICPb with the second length Ltb. Accordingly, it is possible to stop providing an augmented reality-based lane guide when the vehicle stops.

. As a vehicle travels, the processor 175 according to an embodiment of the present disclosure may be configured to update and display the augmented reality lane carpet ICPa with the first length Lta or the augmented reality lane carpet ICPb with the second length Ltb.

. For example, the processor 175 may continuously detect lane line object based on the image from the camera 195. In the case in which the detected lane line object have the first shape at a first time point, the processor 175 may be configured to display the augmented reality lane carpet ICPa with the first length Lta, and in the case in which the detected lane line object have the second shape at a second time point, the processor 175 may be configured to display the augmented reality lane carpet ICPb with the second length Ltb. Accordingly, an augmented reality-based lane guide based on traveling of a vehicle can be provided.

. Meanwhile, in the case in which a driving speed of a vehicle is lower than or equal to a reference speed, the processor 175 according to an embodiment of the present disclosure may be configured to display the augmented reality lane carpet without updating the augmented reality lane carpet ICPa with the first length Lta or the augmented reality lane carpet ICPb with the second length Ltb. In this case, the reference speed may be approximately 5 km/h. Accordingly, an augmented reality-based lane guide based on traveling of a vehicle can be provided.

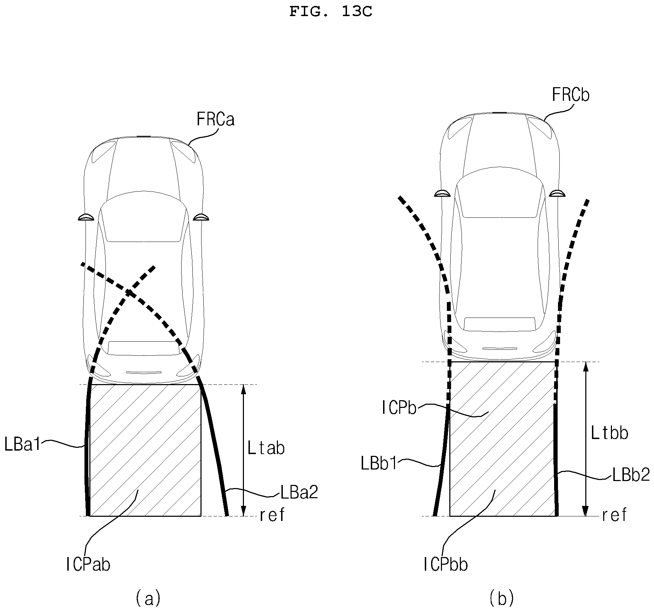

. FIG. 13C is a diagram illustrating an augmented reality lane carpet based on detected lane line object in consideration of a preceding vehicle.

. Referring to FIG. 13C, in the case in which a preceding vehicle object FRCa is detected based on an image from the camera 195, the processor 175 may be configured to limit a length of the augmented reality lane carpet, which has the first length Lta, to a third length Ltab corresponding to a distance from the preceding vehicle object FRCa, as illustrated in (a) of FIG. 13C.

. That is, based on the first shape in which the width between detected lane line object decreases, and in the case in which the preceding vehicle object FRCa is detected based on the image from the camera 195 and a distance from the preceding vehicle object FRCa is smaller than the first length Lta, the processor 175 may be configured to set and display an augmented reality lane carpet ICPab having the third length Ltab corresponding to the distance from the preceding vehicle object FRCa, as illustrated in (a) of FIG. 13C. Accordingly, an augmented reality-based lane guide corresponding to a position of the preceding vehicle can be provided.

. Meanwhile, in the case in which a preceding vehicle object FRCb based on an image from the camera 195, the processor 175 may be configured to limit a length of the augmented reality lane carpet, which has the second length Ltb, to a fourth length Ltbb, as illustrated in (b) of FIG. 13C.

. That is, based on the second shape in which the width between the detected lane line object increases, and in the case in which the preceding vehicle object FRCb is detected based on the image from the camera 195 and a distance from the preceding vehicle object FRCb is smaller than the second length Ltb, the processor 175 may be configured to set and display an augmented reality lane carpet ICPbb having the fourth length Ltbb corresponding to the distance from the preceding vehicle object FRCb, as illustrated in (b) of FIG. 13C. Accordingly, an augmented reality-based lane guide corresponding to a position of the preceding vehicle can be provided.

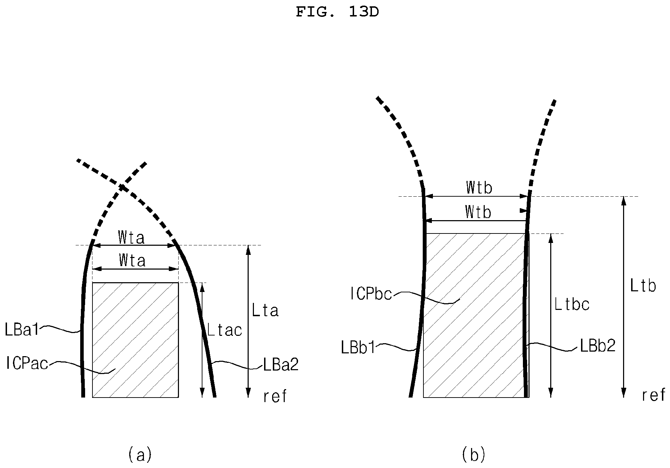

. FIG. 13D is a diagram illustrating an example of an augmented reality lane carpet based on detected lane line object in consideration of a vehicle speed.

. Referring to FIG. 13D, the processor 175 according to an embodiment of the present disclosure may be configured to receive vehicle speed information from the sensor device 700, and change a length of an augmented reality lane carpet with a first length or a length of an augmented reality lane carpet with a second length based on the vehicle speed information.

. For example, based on the first shape in which the width between the detected lane line object decreases, and in the case in which a vehicle speed is a second speed slower than the first speed shown in (a) of FIG. 13B, the processor 175 may be configured to set and display an augmented reality lane carpet ICPac having a fifth length Ltac smaller than the first length Lta, as illustrated in (a) of FIG. 13D. Accordingly, an augmented reality-based lane guide corresponding to a vehicle speed and a lane shape can be provided.

. In another example, based on the second shape in which the width between the detected lane line object increases, and in the case in which a vehicle speed is a second speed slower than the first speed shown in (b) of FIG. 13B, the processor 175 may be configured to set and display an augmented reality lane carpet ICPbc having a sixth length Ltbc smaller than the second length Ltb, as illustrated in (b) of FIG. 13D. Accordingly, an augmented reality-based lane guide corresponding to a vehicle speed and a lane shape can be provided.

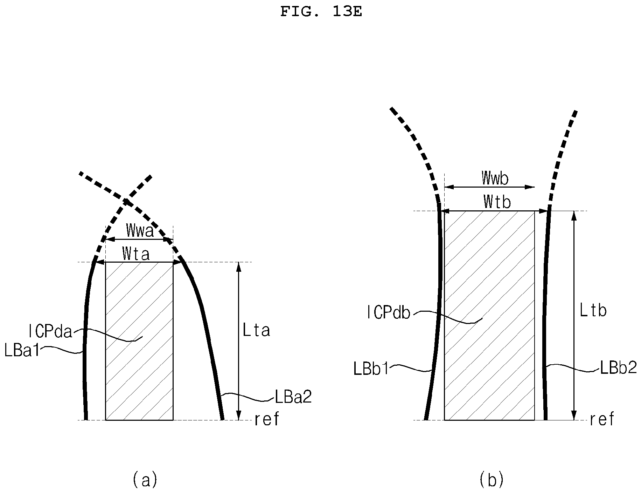

. FIG. 13E is a diagram illustrating another example of an augmented reality lane carpet based on detected lane line object in consideration of a vehicle speed.

. Referring to FIG. 13E, the processor 175 according to an embodiment of the present disclosure may be configured to receive vehicle speed information from the sensor device 700, and change a width of an augmented reality lane carpet with a first length or a width of an augmented reality lane carpet with a second length based on the vehicle speed information.

. For example, in response to the first shape corresponding to a decreasing width of the detected lane line object, and in the case in which a vehicle speed is a second speed slower than the first speed shown in (a) of FIG. 13A, the processor 175 may be configured to set and display an augmented reality lane carpet ICPda having a third width Wwa smaller than the first width Wta, as illustrated in (a) of FIG. 13E. In this case, the augmented reality lane carpet ICPda may have the first length Lta. Accordingly, an augmented reality-based lane guide corresponding to a vehicle speed and a lane shape can be provided.

. In another example, based on the second shape in which a width between the detected lane line object increases, and in the case in which a vehicle speed is a second speed slower than the first speed shown in (b) of FIG. 13A, the processor 175 may be configured to set and display an augmented reality lane carpet ICPdb having a fourth width Wwb smaller than the first width Wtb, as illustrated in (b) of FIG. 13E. In this case, the augmented reality lane carpet ICPdb may have the second length Ltb. Accordingly, an augmented reality-based lane guide corresponding to a vehicle speed and a lane shape can be provided.

. Meanwhile, unlike FIG. 13A, the second shape may be a shape in which the width between the detected lane line object is uniform.

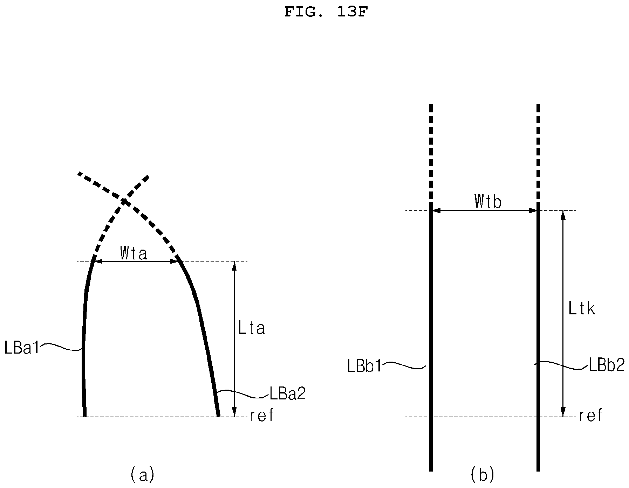

. FIG. 13F is a diagram illustrating a first shape in which a width between detected lane line object decreases, and a second shape in which a width between detected lane line object is uniform.

. Referring to FIG. 13F, (a) illustrates an example in which the width between the detected lane line object LBa1 and LBa2 decreases away from a vehicle position which is a reference line ref.

. In FIG. 13F, (b) illustrates an example in which the width between the detected lane line object LBb1 and LBb2 is uniform even at a position further away from the vehicle position which is the reference line ref.

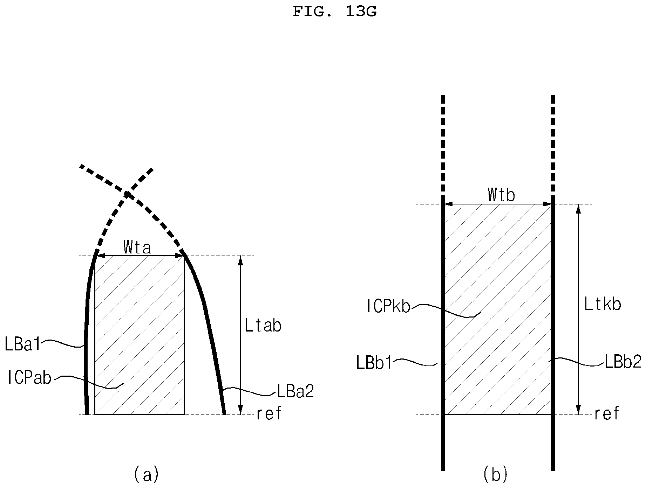

. FIG. 13G is a diagram illustrating an augmented reality lane carpet based on the detected lane line object of FIG. 13F.

. Referring to FIG. 13G, the processor 175 according to an embodiment of the present disclosure may be configured to set and display an augmented reality lane carpet ICPab with a first length Ltab as illustrated in (a) of FIG. 13G, in the case in which the detected lane line object LBa1 and LBa2 have the first shape.

. Particularly, based on the first shape in which the width between the detected lane line object LBa1 and LBa2 decreases, and in the case in which the width between the detected lane line object LBa1 and LBa2 has the first reference value Wta, the processor 175 according to an embodiment of the present disclosure may be configured to set a length, corresponding to the first reference value Wta, to be a first length Ltab.

. Meanwhile, based on the second shape in which the width between the detected lane line object LBb1 and LBb2 is greater than the first shape and the width Wtb is uniform, the processor 175 according to an embodiment of the present disclosure may be configured to set and display an augmented reality lane carpet ICPkb with a second length Ltkb greater than the first length Ltab.

. Particularly, based on the second shape in which the width between the detected lane line object LBb1 and LBb2 is uniform, and in the case in which the width between the detected lane line object LBb1 and LBb2 has a second reference value Wtb, the processor 175 according to an embodiment of the present disclosure may be configured to set a length, corresponding to the second reference value Wtb, to be a second length Ltkb. Accordingly, an augmented reality-based lane guide corresponding to a lane shape can be provided.

. FIG. 14 is a flowchart illustrating a method of operating a signal processing device according to another embodiment of the present disclosure.

. Referring to FIG. 14, the processor 175 in the signal processing device 170 according to another embodiment of the present disclosure may be configured to determine whether lane line object detected based on an image from the camera 195 are valid (S810), and if so, the processor 175 may be configured to determine whether map data stored in the memory 140 is valid (S813), and if so, the processor 175 may be configured to determine whether the detected lane line object match the map data stored in the memory 140 (S815), and if the detected lane line object do not match the map data, the processor 175 may be configured to set and display an augmented reality lane carpet based on the detected lane line object (S820).

. Meanwhile, in the case in which the detected lane line object match the map data stored in the memory 140 in operation 815 (S815), the processor 175 in the signal processing device 170 according to another embodiment of the present disclosure may be configured to display an augmented reality route carpet based on the map data (S825).

. That is, the processor 175 in the signal processing device 170 according to another embodiment of the present disclosure may be configured to display an augmented reality route carpet based on the map data in the case in which the lane line object, which are detected based on the image from the camera 195, match the map data stored in the memory 140, and display an augmented reality lane carpet based on the detected lane line object in the case in which the detected lane line object do not match the map data stored in the memory 140. Accordingly, an augmented reality-based lane guide corresponding to a lane shape can be provided.

. In the case in which the detected lane line object have the first shape when the detected lane line object do not match the map data stored in the memory 140, the processor 175 may be configured to set and display the augmented reality lane carpet ICPa with the first length Lta, and in the case in which the detected lane line object have the second shape in which a width therebetween is greater than the first shape, the processor 175 may be configured to display the augmented reality lane carpet ICPb with the second length Ltb greater than the first length. Accordingly, an augmented reality-based lane guide corresponding to a lane shape can be provided.

. Meanwhile, in the case in which the map data stored in the memory 140 is not valid in operation 813 (S813), the processor 175 in the signal processing device 170 according to another embodiment of the present disclosure may be configured to set and display an augmented reality lane carpet based on the detected lane line object in operation 820 (S820).

. Meanwhile, in the case in which the lane line object detected based on the image from the camera 195 are not valid in operation 810 (S810), the processor 175 may perform operation 821 (S821) to determine whether the map data stored in the memory 140 is valid, and if the map data stored in the memory 140 is valid, the processor 175 may be configured to display an augmented reality route carpet based on the map data in operation 825 (S825).

. Meanwhile, in the case in which the map data is not stored in the memory 140 or is not valid in operation 821 (S821), the processor 175 may be configured to perform operation 827 (S827) to determine whether vehicle speed information and yaw rate information, received from the sensor device 700, are valid (S827), and if so, the processor 175 may perform dynamic mode (S830).

. That is, in the case in which the lane line object are not detected in the image from the camera 195, the map data is not stored in the memory 140 or is not valid, and the vehicle speed information and yaw rate information received from the sensor device 700 are valid, the processor 175 may be configured to display an augmented reality dynamic carpet in the dynamic mode based on the vehicle speed information and yaw rate information. Accordingly, an augmented reality-based lane guide based on the vehicle information and yaw rate information can be provided.

. Meanwhile, in the case in which the vehicle information and yaw rate information received from the sensor device 700 are not valid in operation 827 (S827), the processor 175 may be configured to perform operation 835 (S835) so as not to display an augmented reality carpet (S835).

. That is, in the case in which the lane line object are not detected in the image from the camera 195, the map data is not stored in the memory 140 or is not valid, and the vehicle speed information and yaw rate information received from the sensor device 700 are not valid, the processor 175 may be configured to not display an augmented reality carpet. Accordingly, it is possible to stop providing an augmented reality-based lane guide.

. Meanwhile, if one lane border is detected instead of two lane borders or if there is no lane border as in the case of an intersection, the processor 175 may be configured to perform the dynamic mode.

. That is, if one lane border is detected instead of two lane borders or if there is no lane border as in the case of an intersection, the processor 175 may be configured to display an augmented reality dynamic carpet based on the vehicle speed information and yaw rate information.

. Meanwhile, while providing the augmented reality dynamic carpet upon detecting one lane border, if two lane borders are detected, the processor 175 may be configured to change a mode to provide an augmented reality lane carpet.

. Meanwhile, the processor 175 may be configured to provide the augmented reality dynamic carpet only in the case in which the vehicle speed is higher than 1 m/sec.

. Meanwhile, the lane border based on the image from the camera 195 may have noise, and processing of the noise will be described below with reference to FIG. 15A and subsequent figures.

. FIG. 15A is a flowchart illustrating a method of operating a signal processing device according to yet another embodiment of the present disclosure, and FIG. 15B is a diagram referred to in the description of FIG. 15A.

. Referring to FIG. 15A, the processor 175 in the signal processing device 170 according to yet another embodiment of the present disclosure may be configured to determine whether lane line object, detected based on the image from the camera 195, include two lane borders (S1010), and if so, the processor 175 may be configured to determine whether a width between two lane lines is outside an allowable range (S1015), and if so, the processor 175 may be configured to determine whether there is previous lane line information (S1017), and if so, the processor 175 may be configured to determine whether there is continuity with the previous lane line information (S1020), and if so, the processor 175 may be configured to determine whether a vehicle is changing lanes (S1025), and if so, the processor 175 may be configured to update the previous lane line information to current lane line information (S1030).

. Then, the processor 175 may be configured to display an augmented reality lane carpet 1045 based on the updated lane information, as illustrated in FIG. 15B.

. Meanwhile, in the case in which the vehicle is not changing lanes in operation 1025 (S1025) or in the case in which there is no previous lane information in operation 1017 (S1017), the processor 175 may be configured to perform filtering out (S1035) so as to stop displaying the augmented reality lane carpet.

. Meanwhile, in the case in which the width between the two lane lines is within the allowable range in operation 1015 (S1015), the processor 175 may be configured to immediately perform operation 1030 (S1030) to update the previous lane line information to current lane line information.

. In this case, the allowable range may be a width of 2.5 m to 4.0 m between the two lane lines.

. Meanwhile, in the case in which there is no continuity with the previous line lane information, the processor 175 may be configured to immediately perform operation 1030 (S1030) to update the previous lane line information to the current lane line information.

. In this case, the criteria for continuity may include the case in which a movement change of each of the two left and right lane lines is less than 15 cm.

. Meanwhile, the criteria for changing lanes in operation 1025 (S1025) may include the case in which a difference in movement change between the respective two left and right lane lines is less than 25 cm, or the case in which movement of both of the two lane lines changes in the same direction, and a sum of amounts of movement change of the two lane lines exceeds 3 m.

. That is, the processor 175 may be configured to update previous lane line object to current lane line object in the case in which a width between lane lines, detected based on lane line object in the image from the camera 195, is within the allowable range, and the processor 175 may be configured to not update previous lane line object to current lane line object in the case in which the width between the detected lane lines is outside the allowable range. Accordingly, an augmented reality-based lane guide corresponding to a lane width can be provided.

. Meanwhile, double lane markings may be detected on a lane border based on the image from the camera 195. It is desirable to perform signal processing in order not to mistake a space between the double lane markings for a lane, which will be described below with reference to FIG. 15C and subsequent figures.

. FIG. 15C is a flowchart illustrating a method of operating a signal processing device according to yet another embodiment of the present disclosure, and FIG. 15D is a diagram referred to in the description of FIG. 15C.

. Referring to FIG. 15C, the processor 175 in the signal processing device 170 according to yet another embodiment of the present disclosure may be configured to determine whether there is current lane line information detected based on an image from the camera 195 (S1050).

. In this case, the current lane line information may include information about two lane borders.

. The processor 175 may be configured to delete previous information about the left lane line in the case in which there is no current lane line information, particularly the left lane line of two lane lines, and delete previous information about the right lane line in the case in which there is no right lane line (S1052).

. In the case in which there is current lane line information, the processor 175 may be configured to determine whether both of previous information and current information about the two lane lines are valid (S1055), and if so, the processor 175 may be configured to determine whether a lane width variation compared to the previous lane line information is greater than or equal to a reference variation (S1057), and if so, the processor 175 may be configured to determine whether a movement change of one lane line is less than or equal to a set value (S1060), and if so, the processor 175 may be configured to determine whether each of the two lane lines remains as double lane markings for a predetermined period of time (S1062), and if so, the processor 175 may be configured to determine that the respective two lane lines are not double lane markings (S1065).

. Then, the processor 175 updates the previous lane line information to current lane line information (S1070).

. Meanwhile, in the case in which each of the two lane lines does not remain as double lane markings for the predetermined period of time in operation 1062 (S1062), the processor 175 may be configured to determine an opposite lane line, in which there is a movement change, as double lane markings and filters out the opposite lane line (S1067). That is, the processor 175 performs filtering out to stop displaying an augmented reality lane carpet.

. Then, after operation 1067 (S1067), the processor 175 may be configured to perform operation 1070 (S1070).

. Meanwhile, if the current information and the previous information are not valid in operation 1055 (S1055) or if the lane width variation is not greater than or equal to the reference variation in operation 1057 (S1057), etc., the processor 175 may be configured to immediately perform operation 1070 (S1070).

. As a result, if the lane width variation compared to the previous lane information is greater than or equal to the reference variation, and a movement change of one lane line is less than or equal to the set value, the processor 175 may be configured to classify the opposite lane line as double lane markings, and information about the lane line detected as double lane markings may be maintained using previous lane information.

. Meanwhile, in the case in which a lane width variation, detected based on the lane line object in the image from the camera 195, is greater than or equal to a first level, and a variation of one of two lane lines is a second level lower than the first level, the processor 175 may be configured to maintain the previous lane line information. Accordingly, an augmented reality-based lane guide corresponding to a lane width can be provided.

. In FIG. 15D, (a) illustrates an example of displaying an augmented reality lane carpet 1085 by mistakenly detecting double lane markings on the left and right of the dotted line as a boundary.

. Accordingly, a problem occurs in that an augmented reality lane carpet 1085 may be blurred.

. In FIG. 15D, (b) illustrates an example of displaying an augmented reality lane carpet 1095 by recognizing double lane markings on the right of the dotted line as a boundary.

. As illustrated in (b) of FIG. 15D, the processor 175 may be configured to identify double lane markings on the right of the dotted line by using the method of FIG. 15C, thereby stably displaying the augmented reality lane carpet 1095.

. FIGS. 16A to 19 are diagrams referred to in the description of operation of the signal processing device of FIG. 10.

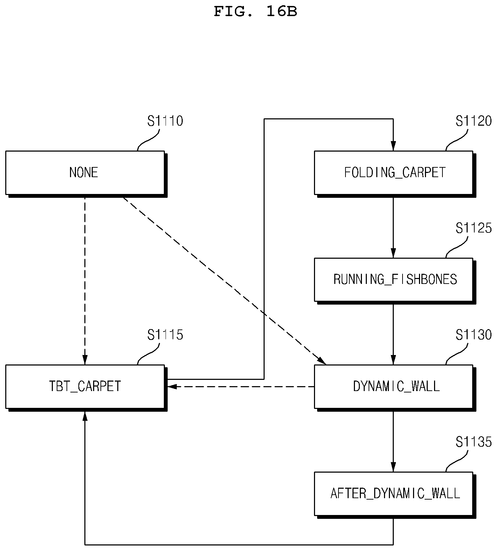

. First, FIGS. 16A and 16B are diagrams referred to in the description of various modes of an augmented reality lane carpet.

. Referring to FIGS. 16A and 16B, the processor 175 may be configured to provide the augmented reality lane carpet by dividing the augmented reality lane carpet into Static Wall Arrow (SWA) and Dynamic Wall Arrow (DWA) according to Guidance State Context.

. The processor 175 may be configured to divide the augmented reality lane carpet into zones of NONE (S1110), TBT_CARPET (S1115), FOLDING_CARPET (S1120), RUNNING_FISHBONES (S1125), DYNAMIC_WALL (S1130), and AFTER_DYNAMIC_WALL (S1135).

. Meanwhile, the processor 175 may be configured to provide a set user interface UI for the respective zones S1110 to S1135 depending on the Static Wall Arrow (SWA) or the Dynamic Wall Arrow (DWA), as illustrated in FIG. 16A.

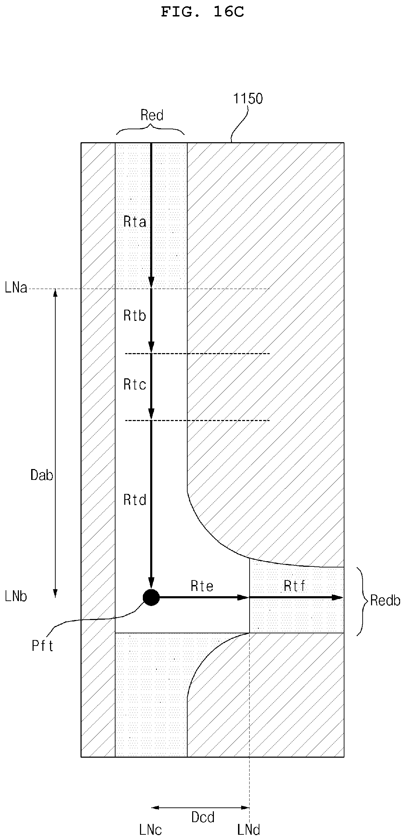

. FIG. 16C illustrates an example of a road with Rta corresponding to the TBT_CARPET (S1115), Rtb corresponding to the FOLDING _CARPET (S1120), Rtc corresponding to the RUNNING_FISHBONES (S1125), Rtd corresponding to the AFTER_DYNAMIC_WALL (S1135), and Rtf corresponding to the TBT_CARPET (S1115) again.

. During the TBT_CARPET (S1115), the FOLDING_CARPET (S1120), the RUNNING_FISHBONES (S1125), and the DYNAMIC _WALL (S1130) which are a straight section, the processor 175 may be configured to provide the user interface depending on the Static Wall Arrow (SWA) or the Dynamic Wall Arrow (DWA) as illustrated in FIG. 16A.

. Particularly, the processor 175 may output au augmented reality lane carpet with a length Dab during the TBT_CARPET (S1115), the FOLDING_CARPET (S1120), the RUNNING_FISHBONES (S1125), and the DYNAMIC _WALL (S1130) which are a portion of the straight section.

. Meanwhile, during the AFTER_DYNAMIC_WALL (S1135) which is a left turn section including a left-turning point Pft, the processor 175 may be configured to provide an augmented reality lane carpet with a length Dcd that corresponds to a distance between Lnc, which is a center line of a straight road Red, and Lnd which is a center line of a left road Redb.

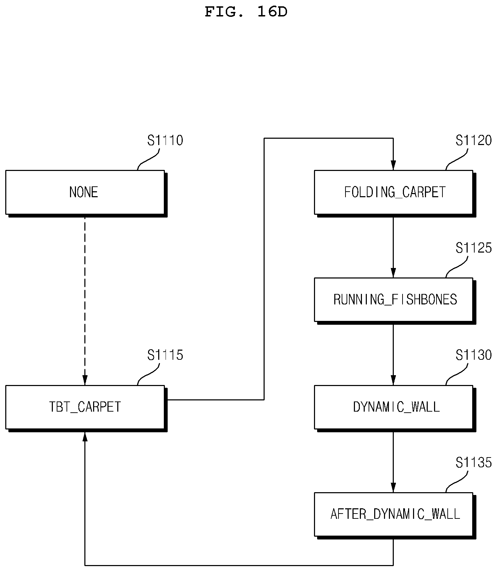

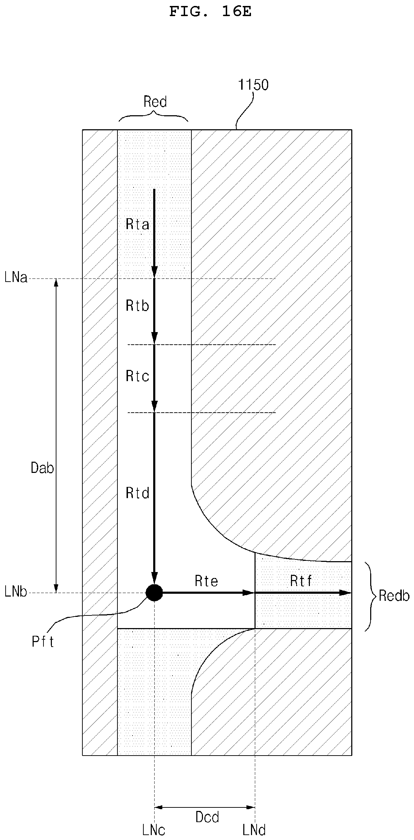

. FIGS. 16D and 16E are diagrams illustrating a typical Dynamic Wall Arrow (DWA) scenario.

. Referring to FIGS. 16D and 16E, the processor 175 may perform, in the DWA mode, the NONE (S1110), the TBT _CARPET (S1115), the FOLDING_CARPET (S1120), the RUNNING_FISHBONES (S1125), the DYNAMIC_WALL (S1130), and the AFTER_DYNAMIC_WALL (S1135), followed by the TBT _CARPET (S1115) again.

. Accordingly, the processor 175 may be configured to provide an augmented reality lane carpet while performing, in the DWA mode, the TBT _CARPET (S1115), the FOLDING_CARPET (S1120), the RUNNING_FISHBONES (S1125), the DYNAMIC_WALL (S1130), and the AFTER_DYNAMIC_WALL (S1135), followed by the TBT_CARPET (S1115) again.

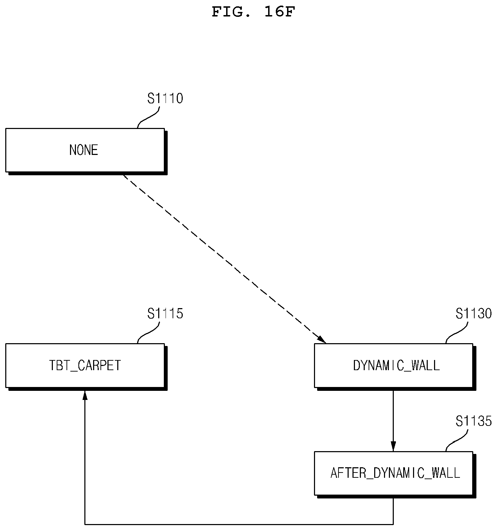

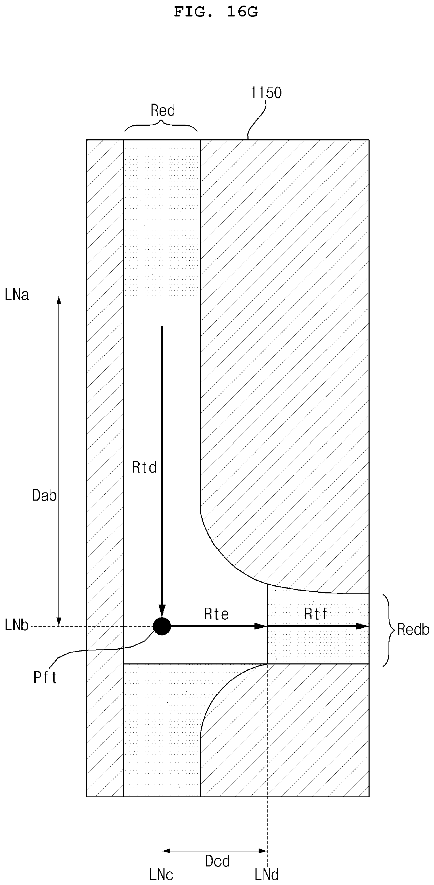

. FIGS. 16F and 16G are diagrams illustrating a scenario for providing augmented reality starting from a portion of the straight section.

. Referring to FIGS. 16F and 16G, the processor 175 may perform the NONE (S1110), the DYNAMIC_WALL (S1130), the AFTER_DYNAMIC_WALL (S1135), and the TBT_CARPET (S1115).

. That is, in comparison with FIGS. 16D and 16E, the TBT_CARPET (S1115), the FOLDING_CARPET (S1120), and the RUNNING_FISHBONES (S1125) may be omitted between the NONE (S1110) and the DYNAMIC _WALL (S1130).

. Accordingly, the processor 175 may be configured to provide the augmented reality lane carpet during the DYNAMIC _WALL (S1130), the AFTER_DYNAMIC_WALL (S1135), and the TBT _CARPET (S1115).

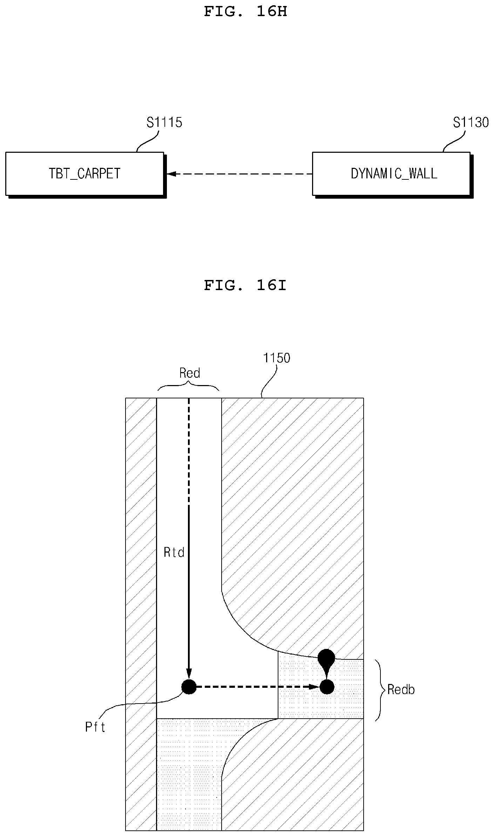

. FIGS. 16H and 16I are diagrams illustrating a scenario for providing augmented reality starting from a point immediately before an intersection.

. Referring to FIGS. 16H and 16I, the processor 175 may perform the DYNAMIC _WALL (S1130) and the TBT _CARPET (S1115).

. That is, in comparison with FIGS. 16D and 16E, the NONE (S1110), the TBT _CARPET (S1115), the FOLDING _CARPET (S1120), and the RUNNING_FISHBONES (S1125) may be omitted before the DYNAMIC _WALL (S1130).

. Accordingly, the processor 175 may be configured to provide the augmented reality lane carpet during the DYNAMIC_WALL (S1130) and the TBT_CARPET (S1115).

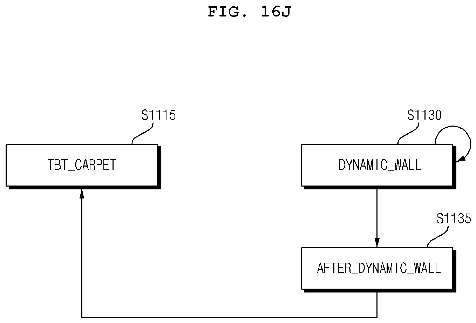

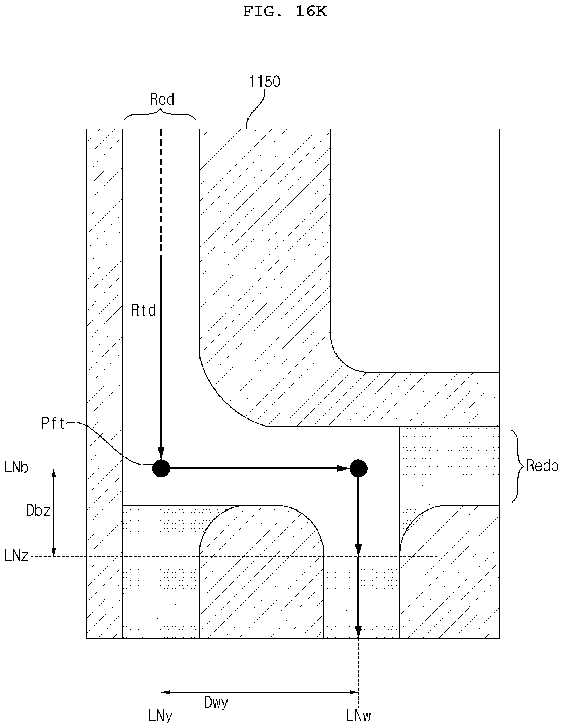

. FIGS. 16J and 16K are diagrams illustrating a scenario for providing augmented reality after a left turn.

. Referring to FIGS. 16J and 16K, the processor 175 may perform, in the DWA mode, the DYNAMIC _WALL (S1130), the AFTER_DYNAMIC_WALL (S1135), and the TBT_CARPET (S1115).

. That is, in comparison with FIGS. 16D and 16E, the NONE (S1110), the TBT _CARPET (S1115), the FOLDING_CARPET (S1120), and the RUNNING_FISHBONES (S1125) may be omitted before the DYNAMIC_WALL (S1130).

. Accordingly, the processor 175 may be configured to provide the augmented reality lane carpet during the DYNAMIC_WALL (S1130), the AFTER_DYNAMIC_WALL (S1135), and the TBT _CARPET (S1115).

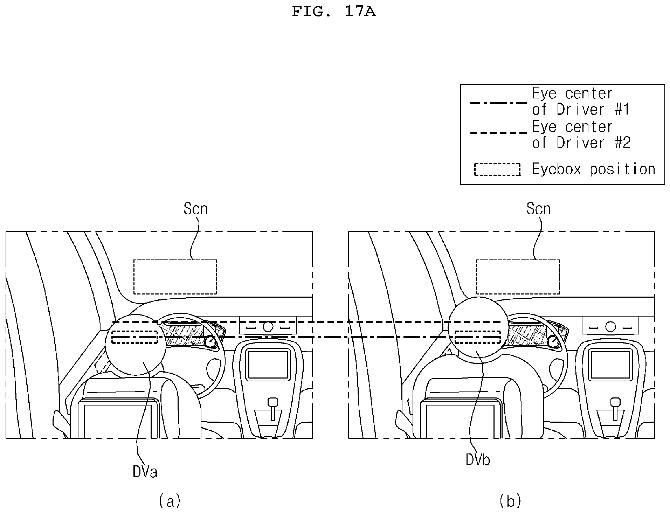

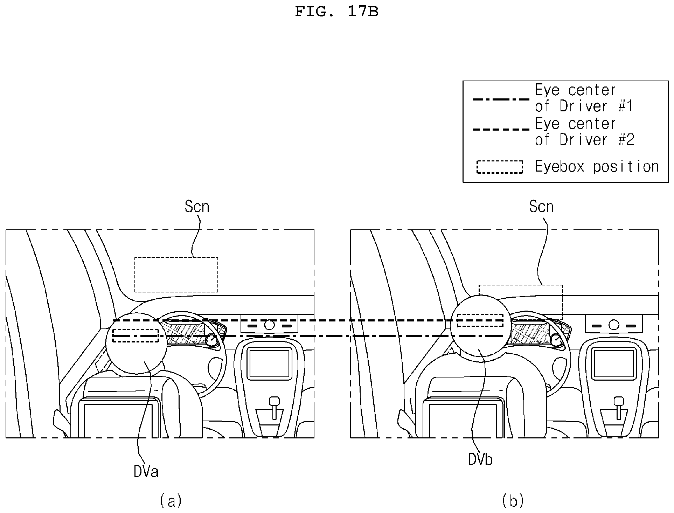

. FIGS. 17A and 17B are diagrams illustrating different driver positions in a vehicle.

. In the case in which a screen Scn, on which an image output by the image projecting device 180h is projected, is at the same position when there is a difference in eye level between a first driver DVa and a second driver DVb as illustrated in FIGS. 17A, the projected image is output at a position unsuitable for the driver's view.

. Accordingly, as illustrated in FIG. 17B, the processor 175 may be configured to detect a position of a driver's eyes based on an image from a vehicle internal camera EDt, and change a position of the screen SCn of the projected image.

. Particularly, in the case in which an eye level of the first driver DVa is higher than an eye level of the second driver DVb, the processor 175 may be configured to lower the position of the screen Scn of the projected image, thereby outputting the projected image at a position suitable for the position of the driver's eyes, as illustrated in FIG. 17B.

. Meanwhile, the processor 175 may be configured to detect the position of a driver's eyes based on the image from the vehicle internal camera EDt, and change a position for projecting the augmented reality lane carpet ICPa with the first length Lta or the augmented reality lane carpet ICPb with the second length Ltb, based on the position of the eyes. Accordingly, an augmented reality lane guide corresponding to the driver's position can be provided.

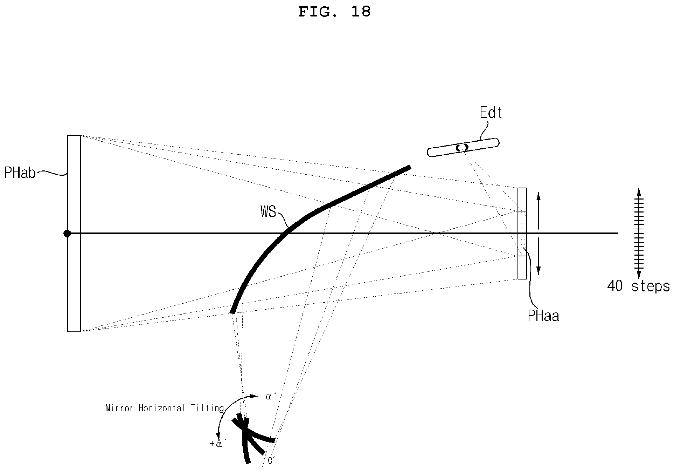

. FIG. 18D is a diagram explaining an example of adjusting the height of a projected image.

. Referring to FIG. 18D, the processor 175 may be configured to identify an eye position including height information of the eyes of a driver, and change a position of an image projected by an optical device PHaa onto a windshield Ws or may change an angle of the projected image.

. Accordingly, the driver may recognize, as a virtual image PHab, the projected image with a changed projection angle.

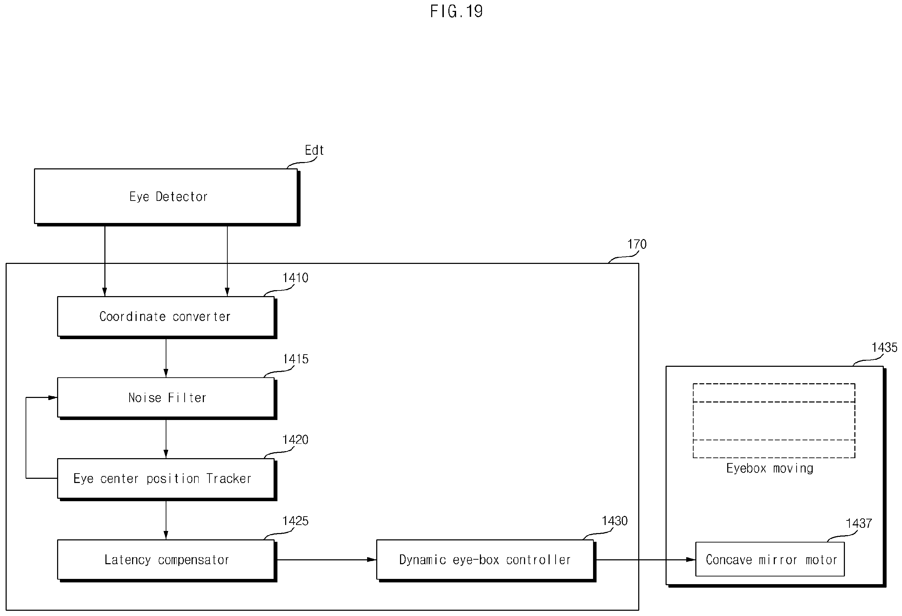

. FIG. 19 is an exemplary internal block diagram of the signal processing device 170 for adjusting a projected image.

. Referring to FIG. 19, the signal processing device 170 may include a coordinate converter 1410 configured to perform coordinate conversion based on an image from the vehicle internal camera EDt, a noise filter 1415 configured to filter noise, an eye center position tracker 1420 configured to track an eye center position, a latency compensator 1425 configured to perform latency compensation, and a controller 1430 configured to control a projection angle or a projection position.

. Meanwhile, a signal output from the controller 1430 may be output to a screen controller 1435 including a mirror control motor 1437 configured to control mirror, so as to control a screen position.

. It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a memory configured to store data for an augmented reality lane carpet; and
a processor configured to detect lane line object based on an image from a camera,
wherein in response to the detected lane line object corresponding to a first shape, the processor is configured to set and display an augmented reality lane carpet with a first length, and in response to the detected lane line object corresponding to a second shape with a greater width than the first shape, the processor is configured to set and display an augmented reality lane carpet with a second length greater than the first length.

2. The signal processing device of claim 1, wherein the memory is configured to store data for a lane image,
wherein in response to the detected lane line object corresponding to the first shape, the processor is configured to display a lane image with the first length, and in response to the detected lane line object corresponding to the second shape, the processor is configured to display a lane image with the second length.

3. The signal processing device of claim 1, wherein:
in response to the first shape corresponding to a decreasing width of the detected lane line object and the width of the detected lane line object corresponding to a first reference value, the processor is configured to set a length corresponding to the first reference value to be the first length; and
in response to the second shape corresponding to a increasing width or a constant with of the detected lane line object and the width of the detected lane line object corresponding to a second reference value greater than the first reference value, the processor is configured to set a length corresponding to the second reference value to be the second length.

4. The signal processing device of claim 1, wherein in response to a preceding vehicle object being detected based on the image from the camera, the processor is configured to limit a length of the augmented reality lane carpet with the first length to a third length, or to limit a length of the augmented reality lane carpet with the second length to a fourth length.

5. The signal processing device of claim 1, wherein the processor is configured to receive vehicle speed information from a sensor device, and to change a width or length of the augmented reality lane carpet with the first length or the augmented reality lane carpet with the second length based on the vehicle speed information.

6. The signal processing device of claim 1, wherein when a vehicle stops, the processor is configured to stop displaying the augmented reality lane carpet with the first length or the augmented reality lane carpet with the second length.

7. The signal processing device of claim 1, wherein as a vehicle travels, the processor is configured to update and display the augmented reality lane carpet with the first length or the augmented reality lane carpet with the second length.

8. The signal processing device of claim 1, wherein in response to a driving speed of the vehicle being lower than or equal to a reference speed, the processor is configured to display the augmented reality lane carpet without updating the augmented reality lane carpet with the first length or the augmented reality lane carpet with the second length.

9. The signal processing device of claim 1, wherein in response to the detected lane line object corresponding to the first shape in a state in which the detected lane line object do not match the map data stored in the memory, the processor is configured to set and display the augmented reality lane carpet with the first length, and
wherein in response to the detected lane line object corresponding to the second shape with a greater width than the first shape, the processor is configured to display the augmented reality lane carpet with the second length greater than the first length.

10. The signal processing device of claim 1, wherein in response to the detected lane line object matching the map data stored in the memory, the processor is configured to display an augmented reality route carpet based on the map data.

11. The signal processing device of claim 1, wherein in response to the lane line object not being detected in the image from the camera, the map data not being stored in the memory or not being valid, and vehicle speed information and yaw rate information being received from the sensor device, the processor is configured to display an augmented reality dynamic carpet based on the vehicle speed information and the yaw rate information.

12. The signal processing device of claim 1, wherein in response to the lane line object not being detected in the image from the camera, the map data not being stored in the memory or not being valid, and the vehicle speed information and yaw rate information not being received from the sensor device, the processor is configured to not display the augmented reality carpet.

13. The signal processing device of claim 1, wherein in response to a width between lane lines, detected based on the lane line object in the image from the camera, being within an allowable range, the processor is configured to update previous lane line object to current lane line object, and
wherein in response to the width between the detected lane lines falling outside the allowable range, the processor is configured to not update the previous lane line object to the current lane line object.

14. The signal processing device of claim 1, wherein in response to a variation in the width between the lane lines, detected based on the lane line object in the image from the camera, being greater than or equal to a first level, and a variation in one of two lane lines being lower than or equal to a second level which is lower than the first level, the processor is configured to maintain previous lane line information of a remaining lane line.

15. The signal processing device of claim 1, wherein the processor is configured to detect a position of a driver's eyes based on an image from a vehicle internal camera, and to change a position for projecting the augmented reality lane carpet with the first length or the augmented reality lane carpet with the second length based on the position of the driver's eyes.

16. The signal processing device of claim 1, wherein the processor comprises:
a data interface configured to receive an image from the camera; and
an augmented reality engine configured to output the augmented reality lane carpet with the first length or the second length based on the image from the camera.

17. The signal processing device of claim 1, wherein the augmented reality engine is configured to perform sensor fusion based on the image from the camera, to perform geometric modeling based on a result of performing the sensor fusion, and to perform visualization based on a result of the modeling.

18. A signal processing device comprising:
a memory configured to store data for an augmented reality lane carpet and map data; and
a processor configured to detect lane line object based on an image from a camera,
wherein in response to the detected lane line object matching the map data stored in the memory, the processor is configured to display an augmented reality route carpet based on the map data, and in response to the detected lane line object not matching the map data stored in the memory, the processor is configured to set and display an augmented reality lane carpet based on the detected lane line object.

19. The signal processing device of claim 18, wherein in response to the detected lane line object corresponding to a first shape, the processor is configured to set and display an augmented reality lane carpet with a first length, and
wherein in response to the detected lane line object corresponding to a second shape with a greater width than the first shape, the processor is configured to set and display an augmented reality lane carpet with a second length greater than the first length.

20. A vehicle display apparatus comprising the signal processing device of any one of claims 1 to 19.
